# EUROPEAN PATENT APPLICATION

(11) **EP 4 325 376 A1**
(43) Date of publication of application: **21.02.2024**
(21) Application number: 21943155.8
(22) Date of filing: 27.12.2021
(51) Int. Cl.: G06F 16/78, H04N 21/235, H04N 21/258, H04N 21/431, H04L 67/02

(54) **INFORMATION PROCESSING DEVICE, INFORMATION PROCESSING METHOD, AND INFORMATION PROCESSING SYSTEM**

(30) Priority: 24.05.2021 JP 2021086935
(71) Applicant: Sony Group Corporation, Tokyo 108-0075 (JP); Sony Interactive Entertainment Inc., Tokyo 108-0075 (JP)
(72) Inventor: NAGANO, Kae, Tokyo 108-0075 (JP); TAKAHASHI, Norihiro, Tokyo 108-0075 (JP); KAMEOKA, Shinpei, Tokyo 108-0075 (JP); NISHIDATE, Masaomi, Tokyo 108-0075 (JP); SEGAWA, Hiroyuki, Tokyo 108-0075 (JP); HONDA, Shinichi, Tokyo 108-0075 (JP)
(74) Representative: 2SPL Patentanwälte PartG mbB
(86) International application number: PCT/JP2021/048460
(87) International publication number: WO 2022/249522

(57) **Abstract**

To more easily create a commented moving image content. An information processing device according to an embodiment includes: an acquisition unit (10, 110, and 120) that acquires information regarding a relationship between a contributor of a content and a viewer of the content; and a comment generation unit (40) that generates a comment to be uttered by a virtual commentator based on the information regarding the relationship.

## Description

### Field

The present disclosure relates to an information processing device, an information processing method, and an information processing system.

### Background

In recent years, with the emergence of moving image distribution services such as YouTube (registered trademark), moving image contents such as sports, games, and education are increasingly distributed with comments such as a commentary and explanation.

### Citation List

### Patent Literature

Patent Literature 1: JP 2018-187712 A

### Summary

### Technical Problem

However, an editing work of adding a comment by speech, text, or the like to a moving image content is generally performed manually by a content creator, and the introduction cost for equipment necessary for editing and the work cost necessary for editing are high, and it is not a situation that anyone can easily create a moving image content with a comment.

Therefore, the present disclosure proposes an information processing device, an information processing method, and a program that enable more easy creation of a commented moving image content.

### Solution to Problem

To solve the problems described above, an information processing device according to an embodiment of the present disclosure includes:an acquisition unit that acquires information regarding a relationship between a contributor of a content and a viewer of the content; and a comment generation unit that generates a comment to be uttered by a virtual commentator based on the information regarding the relationship.

### Brief Description of Drawings

FIG. 1 is a diagram for describing a change in comment according to a position of a virtual commentator according to an embodiment of the present disclosure.
FIG. 2A is a view illustrating an example of a moving image content selection screen according to an embodiment of the present disclosure.
FIG. 2B is a view illustrating an example of a virtual commentator selection screen according to an embodiment of the present disclosure.
FIG. 2C is a view illustrating an example of a selection screen for selecting a position of a virtual commentator according to an embodiment of the present disclosure.
FIG. 2D is a view illustrating an example of a selection screen for selecting a listener of a comment uttered by a virtual commentator according to an embodiment of the present disclosure.
FIG. 2E is a view illustrating an example of a reproduction screen for a commented moving image content according to an embodiment of the present disclosure.
FIG. 3A is a diagram illustrating an example of a case where a comment is added at the time of contributing (uploading) a moving image content according to an embodiment of the present disclosure.
FIG. 3B is a diagram illustrating an example of a case where a comment is added at the time of viewing (downloading) a moving image content according to an embodiment of the present disclosure.
FIG. 4 is a block diagram illustrating a system configuration example in a case where a comment is added at the time of contributing (uploading) a moving image content according to an embodiment of the present disclosure.
FIG. 5A is a flowchart illustrating an example of an operation from the start of an application to setting of a virtual commentator according to an embodiment of the present disclosure.
FIG. 5B is a diagram illustrating an example of a moving image content management table for managing a moving image content according to an embodiment of the present disclosure.
FIG. 5C is a diagram illustrating an example of a character management table for managing a character of a virtual commentator according to an embodiment of the present disclosure.
FIG. 5D is a diagram illustrating an example of a position management table for managing a position of a virtual commentator according to an embodiment of the present disclosure.
FIG. 5E is a diagram illustrating an example of a comment target management table for managing a target (comment target) to which a virtual commentator utters a comment according to an embodiment of the present disclosure.
FIG. 6A is a flowchart illustrating an example of an event extraction operation according to an embodiment of the present disclosure.
FIG. 6B is a diagram illustrating an example of a model management table for managing a recognition model according to an embodiment of the present disclosure.
FIG. 6C is a diagram illustrating an example of an event management table for managing an event according to an embodiment of the present disclosure.
FIG. 6D is a diagram illustrating an example of an event data list according to an embodiment of the present disclosure.
FIG. 7A is a flowchart illustrating an example of a comment generation operation according to an embodiment of the present disclosure.
FIG. 7B is a diagram illustrating an example of a position comment list and an example of a used comment history according to an embodiment of the present disclosure.
FIG. 7C is a diagram illustrating an example of a target comment list according to an embodiment of the present disclosure.
FIG. 8A is a flowchart illustrating an example of an ending conversion operation according to a modified example of an embodiment of the present disclosure.
FIG. 8B is a diagram illustrating an example of a hierarchical relationship management table according to an embodiment of the present disclosure.
FIG. 9A is a flowchart illustrating an example of a generation operation and a distribution operation for a commented moving image content according to an embodiment of the present disclosure.
FIG. 9B is a flowchart illustrating an example of an operation flow of avatar generation processing according to an embodiment of the present disclosure.
FIG. 9C is a flowchart illustrating an example of an operation flow of editing/rendering processing according to an embodiment of the present disclosure.
FIG. 10A is a diagram for describing an example of a case of changing a comment target in a moving image content according to an embodiment of the present disclosure.
FIG. 10B is a diagram illustrating an example of a comment uttered by a virtual commentator at each time in FIG. 10A.
FIG. 11A is a flowchart illustrating an example of a comment generation operation according to an embodiment of the present disclosure.
FIG. 11B is a flowchart illustrating a more detailed operation flow of a position/target adjustment operation in step S220 of FIG. 11A.
FIG. 12A is a diagram for describing an example of a case where a comment is generated based on an emotion value according to an embodiment of the present disclosure.
FIG. 12B is a table illustrating the amount of change in emotion value for each position with respect to each event according to an embodiment of the present disclosure.
FIG. 12C is a diagram for describing a change in emotion value illustrated in FIG. 12A in association with an event according to an embodiment of the present disclosure.
FIG. 13 is a flowchart illustrating an example of an operation flow of comment generation in a case where a position of a virtual commentator is "friend" and a comment target is "player" according to an embodiment of the present disclosure.
FIG. 14 is a block diagram illustrating a system configuration example in a case where a comment is added at the time of viewing (downloading) a moving image content according to an embodiment of the present disclosure.
FIG. 15A is a flowchart illustrating another example of the operation from the start of the application to the setting of the virtual commentator according to an embodiment of the present disclosure.
FIG. 15B is a diagram illustrating an example of a character management table according to an embodiment of the present disclosure.
FIG. 16A is a block diagram illustrating a system configuration example in a case where conversation comments of two virtual commentators are generated for real-time moving image distribution according to an embodiment of the present disclosure.
FIG. 16B is a flowchart illustrating an operation example in a case where conversation comments of two virtual commentators are generated for real-time moving image distribution according to an embodiment of the present disclosure.
FIG. 16C is a diagram illustrating an example of an event interval in a case where conversation comments of two virtual commentators are generated for real-time moving image distribution according to an embodiment of the present disclosure.
FIG. 16D is a flowchart illustrating an example of an operation flow of comment generation processing according to an embodiment of the present disclosure.
FIG. 16E is a flowchart illustrating an example of an operation flow of utterance control processing according to an embodiment of the present disclosure.
FIG. 16F is a flowchart illustrating an example of an operation flow of editing/rendering processing according to an embodiment of the present disclosure.
FIG. 17A is a flowchart illustrating an operation example in a case where a comment is generated according to a feedback from a viewer during real-time moving image distribution according to an embodiment of the present disclosure.
FIG. 17B is a flowchart illustrating an example of an operation flow of viewer feedback processing according to an embodiment of the present disclosure.
FIG. 18 is a flowchart illustrating an example of an operation flow in a case where the number of virtual commentators increases or decreases during live distribution according to an embodiment of the present disclosure.
FIG. 19A is a view illustrating an example of a virtual position in a case where a position of a virtual commentator is "friend watching together" and talks about a moving image content according to an embodiment of the present disclosure.
FIG. 19B is a view illustrating a case where a position of a virtual commentator is "friend watching together" and talks to a viewer according to an embodiment of the present disclosure.
FIG. 19C is a view illustrating a case where a position of a virtual commentator is an "expositor" and talks to a viewer according to an embodiment of the present disclosure.
FIG. 20A is a view illustrating an example of a case where a caption of a voice comment is arranged at a basic position (for example, the lower center of a screen) according to an embodiment of the present disclosure.
FIG. 20B is a view illustrating an example of a case where a position of a caption of a voice comment is adjusted based on line-of-sight information of a contributor according to an embodiment of the present disclosure.
FIG. 20C is a view illustrating an example of a case where a position comment is generated based on line-of-sight information of a viewer and a display position of a caption of a voice comment is adjusted according to an embodiment of the present disclosure.
FIG. 21 is a block diagram illustrating a system configuration example in a case where a comment is generated for each position of a virtual commentator by applying machine learning according to an embodiment of the present disclosure.
FIG. 22 is a hardware configuration diagram illustrating an example of an information processing device that executes various types of processing according to the present disclosure.

### Description of Embodiments

Hereinafter, an embodiment of the present disclosure will be described in detail with reference to the drawings. Note that, in the following embodiment, the same parts are denoted by the same reference signs, and an overlapping description will be omitted.

In addition, the present disclosure will be described according to the following item order.
1. Embodiment
   1.1 Comments depending on position of virtual commentator and target
   1.2 Example of application screen
   1.3 Example of person who adds comment
   1.4 System configuration example in case of adding comment at time of contribution (uploading)
   1.5 Example of operation flow in case of adding comment at time of contribution (uploading)
   1.5.1 Example of operation from start of application to setting of virtual commentator
   1.5.2 Example of event extraction operation
   1.5.3 Example of comment generation operation
   1.5.3.1 Modified example of ending conversion
   1.5.4 Example of generation operation and distribution operation for commented moving image content
   1.5.4.1 Example of avatar generation processing
   1.5.4.2 Example of editing/rendering processing
   1.6 Example of dynamically changing position/comment target
   1.6.1 Example of operation flow
   1.7 Example of generating comment based on emotion value
   1.7.1 Example of operation flow
   1.8 System configuration example in case of adding comment at time of viewing (downloading)
   1.9 Example of operation flow in case of adding comment at the time of viewing (downloading)
   1.10 Example of generating conversation comments of two virtual commentators for real-time moving image distribution
   1.10.1 Example of comment generation processing
   1.10.2 Example of utterance control processing
   1.10.3 Example of editing/rendering processing
   1.11 Example of generating comment according to feedback from viewer during real-time moving image distribution
   1.11.1 Example of viewer feedback
   1.12 Example in which virtual commentator increases or decreases during real-time moving image viewing
   1.13 Example of adjusting display position according to position of virtual commentator
   1.14 Example of comment rule in case where there are plurality of virtual commentators
   1.15 Example of commenting using line-of-sight information
   1.16 Example of display position of caption
   1.17 Example of generating comment for each position of virtual commentator by applying machine learning
2. System configuration example
3. Hardware configuration

### 1. Embodiment

Hereinafter, an information processing device, an information processing method, and an information processing system according to an embodiment of the present disclosure will be described in detail with reference to the drawings. In the present embodiment, an optimal comment is automatically generated for a video of sports, games, or the like in accordance with "in what position and to whom to give a comment". Representative examples of a service for adding a comment to a video include live broadcasting of a sports program broadcast on a television or the like, such as baseball broadcasting or soccer broadcasting. However, recently, with the emergence of a moving image distribution service using the Internet, such as YouTube (registered trademark), the application of the service is also expanding to a moving image content such as live game broadcasting or product introduction. As a result, while a conventional commentary by a television program is broadcasting for an unspecified large number of viewers, in the moving image distribution service using the Internet, a style of making a commentary in consideration of a specific viewer, such as contribution/distribution to a specific group such as friends or a family, or interactively responding to a chat from a viewer during live distribution, has been developed.

### 1.1 Comments depending on position of virtual commentator and target

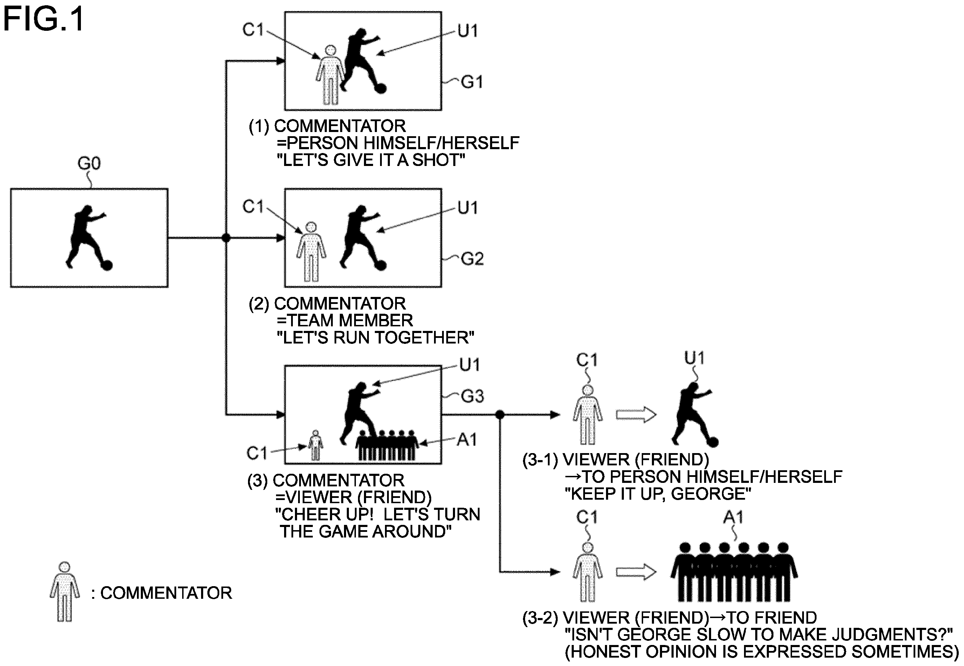

Here, the meaning of "in what position and to whom to give a comment" according to the present embodiment will be described with reference to FIG. 1. FIG. 1 illustrates a case where a virtual commentator C1 gives comments on a moving image content G0 in which a player (a person himself/herself: George) U1 is playing a soccer game in various positions.

(1) of FIG. 1 illustrates a case where the virtual commentator C1 comments as the player U1 playing a soccer game. (2) of FIG. 1 illustrates a case where the virtual commentator C1 comments as a team member of the player U1. The team member may be another player who plays the same soccer game through a network, or may be a non player character (NPC). (3) of FIG. 1 illustrates a case where the virtual commentator C1 comments as one of viewers (for example, friends) watching the soccer game.

In (1), the virtual commentator C1 represents the enthusiasm of the player U1 by saying, for example, "Let's give it a shot!". In (2), the virtual commentator C1 says "Let's run together!" as a team member of the player U1. In (3), the virtual commentator C1 supports, as a viewer, "Cheer up! Let's turn the game around!". In this way, it can be seen that, if the position of the virtual commentator C1 is different for one video scene, suitable comments are different.

Furthermore, regarding (3), in a case where a target to whom a comment is to be given is the player U1 in (3-1) and is a viewer (friend) A1 in (3-2), the name of the player U1 is called and the player U1 is encouraged in (3-1) like "Keep it up, George!", but in (3-2), a conversation expressing an honest opinion may be made among friends like "Isn't George slow to make judgments?".

As described above, unlike a broadcasting commentary of a television program, when generating a comment in consideration of a contributor and a viewer, it is necessary to generate an appropriate comment by clarifying the position of a virtual commentator and a target of the comment. Furthermore, the "position" has two meanings. The first is a position where a person stands, and the second is a role or a viewpoint taken by a certain person in a human relationship or a society. Therefore, in the present embodiment, a case where a comment is generated mainly according to the position having the second meaning is exemplified. However, the present disclosure is not limited thereto, and it is also possible to change a comment to be generated according to the position of a viewer or a virtual commentator in a 3D virtual space, the position having the first meaning.

### 1.2 Example of application screen

Next, an example of a screen of an application that automatically adds a comment to a moving image content (hereinafter, also simply referred to as a video) will be described. In the description, an application with which a user plays a game while recording the game on a smartphone or a game console and then shares a commented playing video (moving image content) to a friend will be exemplified. The application may be an application executed by various information processing devices, such as an application of a smartphone, an application in a game console, or an application of a personal computer. Furthermore, the application that automatically adds a comment to a moving image content may be an application having only a comment addition function, or may be implemented as one function of a game application, a recording application, a moving image reproduction application, a moving image distribution application, or a social networking service (SNS) application capable of handling a moving image content.

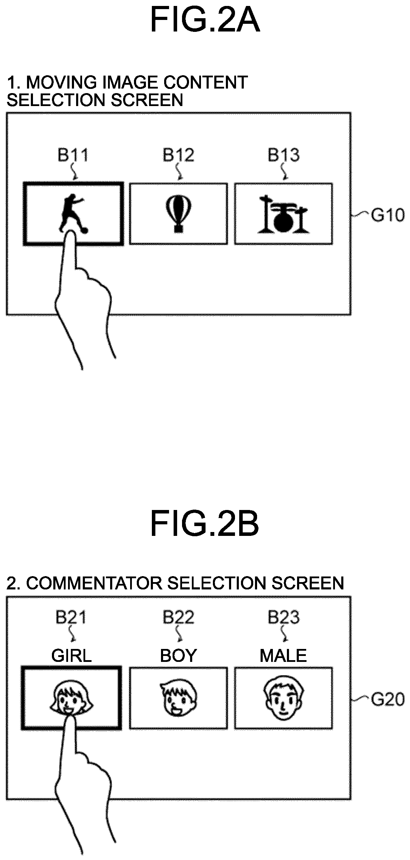

FIGS. 2A to 2E are views illustrating examples of screens of the application that automatically adds a comment to a moving image content according to the present embodiment. In this example, a case where an input device operated by the user is a touch panel arranged on the screen is illustrated, but the present disclosure is not limited thereto, and an input device such as a mouse, a keyboard, or a touch pad may be used.

FIG. 2A is a view illustrating an example of a moving image content selection screen that is a text addition target. As illustrated in FIG. 2A, on a moving image content selection screen G10, for example, thumbnails B11 to B13 of moving image contents that are candidates for the text addition target are presented to the user. As the user selects the thumbnail B11, the thumbnail B12, or the thumbnail B13 displayed on the moving image content selection screen G10, the moving image content to be the text addition target is selected. FIG. 2A illustrates a case where a commentary moving image of a soccer game is selected as the moving image content. For example, in a case where a played game video is recorded, the moving image content to be the text addition target may be selected by displaying an indicator for inquiring the user whether or not to distribute the content and whether or not to add a comment.

FIG. 2B is a view illustrating an example of a selection screen for a virtual commentator that utters a comment for the selected moving image content. As illustrated in FIG. 2B, on a commentator selection screen G20, for example, characters B21 to B23 that are candidates for the virtual commentator who utters a comment on the moving image content are presented to the user. FIG. 2B illustrates the female character B21, the male character B22, and the male character B23. A more specific character for which an individual name is set may be used instead of an abstract character such as a girl, a boy, a male, or a female. In this case, it is possible to impart a more characteristic individuality to each virtual commentator, and thus, it is possible to select a virtual commentator suitable for a user's preference by increasing variations of the virtual commentator.

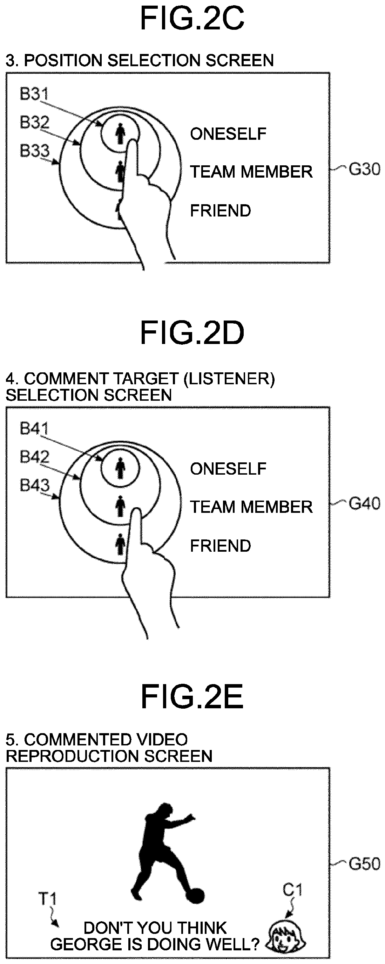

FIG. 2C is a view illustrating an example of a selection screen for selecting a position of the selected virtual commentator. As illustrated in FIG. 2C, on the position selection screen G30, for example, a person himself/herself (player) B31, a team member B32, and a friend B33 are presented to the user. The user may, for example, select "himself" in a case where the user wants the virtual commentator to comment on behalf of him/her, the user may select "team member" in a case where the user wants the virtual commentator to comment as a team member playing the game together, or the user may select "friend" in a case where the user wants the virtual commentator to comment as a friend watching the game. The position presented to the user on the position selection screen G30 is not limited to the above, and may be appropriately changed in accordance with the moving image content selected in FIG. 2A or the virtual commentator selected in FIG. 2B. For example, in a case where a moving image content for education is selected, oneself (a teacher or a student), a classmate, a teacher (in a case where the user is not a teacher), a guardian, or the like may be presented as the position of the virtual commentator to the user.

FIG. 2D is a view illustrating an example of a selection screen for selecting a target person of the comment, that is, a listener (comment target) of the comment uttered by the virtual commentator. As illustrated in FIG. 2D, on a comment target (listener) selection screen G40, for example, a person himself/herself (player) B41, a team member B42, and a friend B43 are presented to the user. For example, the user selects "oneself" in a case where the user wants the virtual commentator in the selected position to comment for the person himself/herself (player), the user selects "team member" in a case where the user wants the virtual commentator to comment for a team member, and the user selects "friend" in a case where the user wants the virtual commentator to comment for a friend (for example, in a case where it is desired to have a conversation between friends). Similarly to the position selection screen G30, the position to be presented to the user on the comment target (listener) selection screen G40 is not limited to the above, and may be appropriately changed according to the moving image content selected in FIG. 2A or the virtual commentator selected in FIG. 2B.

FIG. 2E is a view illustrating an example of a reproduction screen for the moving image content with the comment automatically added to the moving image content selected in FIG. 2A based on the type, the position, and the comment target of the virtual commentator selected in FIGS. 2B to 2D. In the present embodiment, a selected moving image content is analyzed, and a comment to be uttered by a selected virtual commentator is automatically generated for each scene in the moving image according to a similarly selected position and comment target. For example, in a case where a moving image of a commentary of a soccer game is selected, the positions of players and balls in the game, the types of skills, and the like are extracted as events by analyzing the game commentary moving image, and a commentary comment corresponding to each event is generated based on the selected character, the position thereof, and the comment target. Then, as in a commented moving image content G50 illustrated in FIG. 2E, a generated commentary comment T1 is superimposed on a game commentary video in the form of a voice or a text (font) corresponding to the character of the virtual commentator C1. The extraction of the event from the moving image content may be performed by utilizing an open application programming interface (API) of a game, in addition to the method of analyzing the moving image content.

### 1.3 Example of person who adds comment

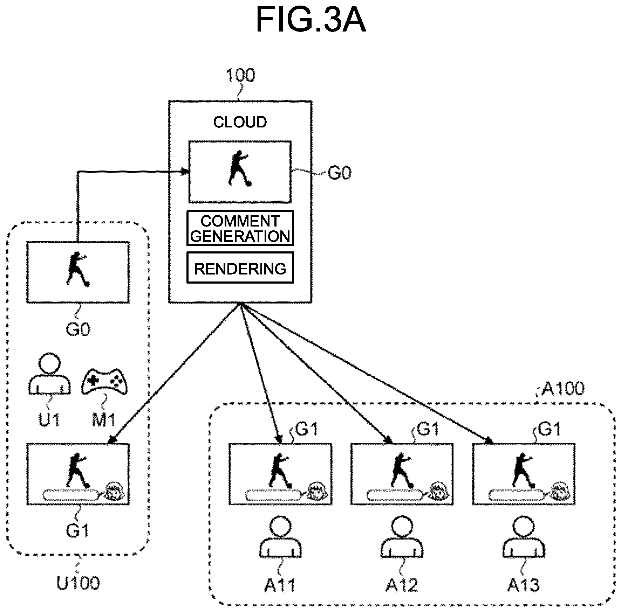

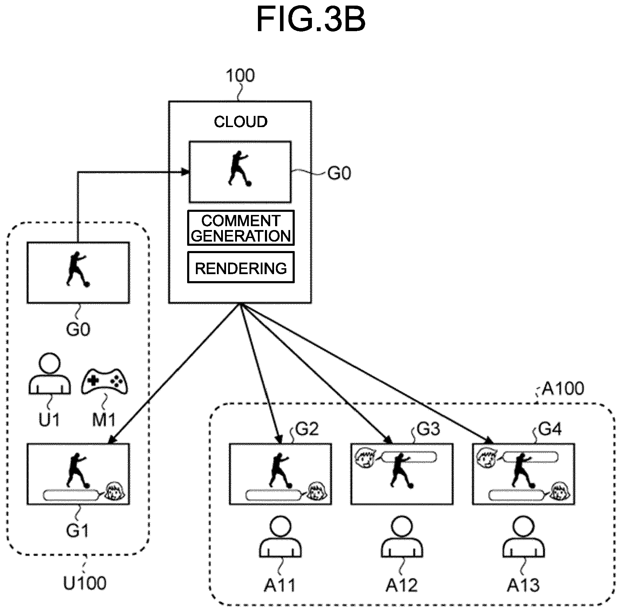

Examples of a subject who adds a comment to a moving image content include a creator of the moving image content, a contributor of the moving image content, a distributor of the moving image content, and a viewer of the moving image content. FIG. 3A is a diagram illustrating an example of a case where the creator of the moving image content, the contributor of the moving image content, or the distributor of the moving image content adds a comment to the moving image content, that is, a case where a comment is added at the time of contributing (uploading) the moving image content. FIG. 3B is a diagram illustrating an example of a case where each viewer (including oneself) of the moving image content individually adds a comment to the moving image content, that is, a case where a comment is added at the time of viewing (downloading) the moving image content. In the description, the subject who adds a comment to the moving image content means, for example, a person who decides to add a comment, including the position of the virtual commentator and the comment target.

FIGS. 3A and 3B illustrate a case where a comment is automatically added to the moving image content G0 in a cloud 100 managed by a service provider of a moving image distribution service which is the distributor of the moving image content. However, the present disclosure is not limited thereto, and a comment may be automatically added to the moving image content G0 in an information processing device (a personal computer, a smartphone, a game console, or the like) of a user side U100 which is the creator or the contributor of the moving image content, or a comment may be automatically added to the moving image content in an information processing device (a personal computer, a smartphone, a game console, or the like) of a viewer side A100 of the moving image content.

As illustrated in FIG. 3A, in a case where the creator of the moving image content, the contributor of the moving image content, or the contributor of the moving image content adds a comment to the moving image content G0 by using a user terminal M1, the creator and/or the contributor (the user U1 in this example) of the same moving image content and viewers A11 to A13 of the moving image content view a commented moving image content G1 to which the same comment is added by the same virtual commentator. However, for example, in a case where the added comment is text, the position and size at which the comment is displayed may be different depending on a viewing environment of each of the viewers A11 to A13 of the moving image content.

On the other hand, as illustrated in FIG. 3B, in a case where each viewer (including the person himself/herself) U1 and A11 to A13 of the moving image content individually adds a comment to the common moving image content G0, selection of the virtual commentator and selection of the position and the comment target are performed by each viewer (including the person himself/herself) U1 and A11 to A13. In this case, comments added to moving image contents G1 to G4 viewed by the viewers (including the person himself/herself) U1 and A11 to A13 are not necessarily the same. In this way, in a case where a comment is individually added on the viewer side, each viewer can select the virtual commentator, the position, and the comment target according to his/her taste or situation. Therefore, each viewer can view the moving image content with a comment suitable for his/her taste or situation.

A configuration, in which the viewer (including the person himself/herself) U1 and A11 to A13 can additionally add a comment to the moving image content G1 to which a comment has been added by the creator of the moving image content, the contributor of the moving image content, or the distributor of the moving image content, based on the virtual commentator, the position, and the comment target selected by the viewer himself/herself at the time of viewing, may also be adopted.

### 1.4 System configuration example in case of adding comment at time of contribution (uploading)

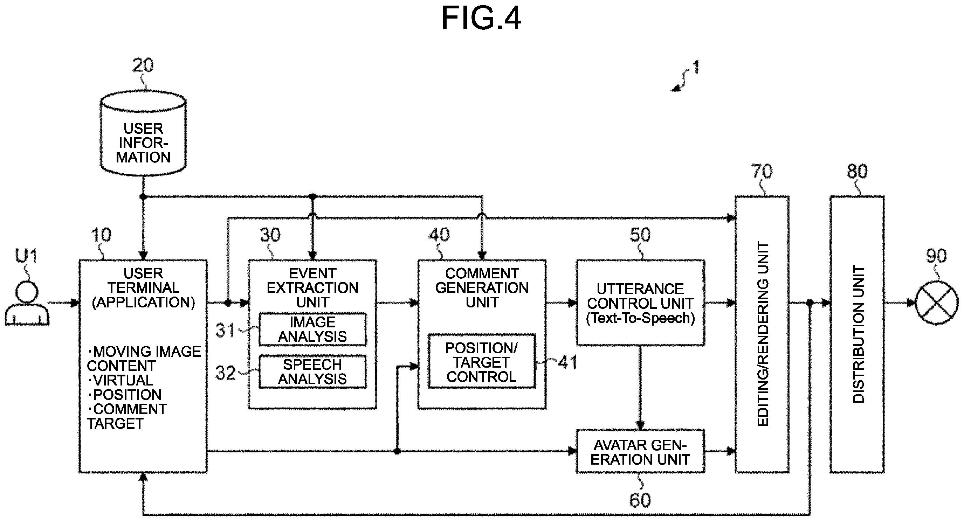

First, a case where a comment is added at the time of contributing (uploading) the moving image content (see FIG. 3A) will be described below. FIG. 4 is a block diagram illustrating a system configuration example in a case where a comment is added at the time of contributing (uploading) the moving image content. In the description, a case where a voice comment is added to the moving image content is exemplified.

As illustrated in FIG. 4, a system configuration of an information processing system 1 in a case of adding a comment at the time of contribution (uploading) includes a user terminal 10, a user information retention unit 20, an event extraction unit 30, a comment generation unit 40, an utterance control unit 50, an avatar generation unit 60, an editing/rendering unit 70, and a distribution unit 80.

The user terminal 10 is, for example, an information processing device on a user U1 side, such as a smartphone, a personal computer, or a game console, and executes an application for generating (recording or the like) a moving image content, automatically adding a comment, or the like.

The user information retention unit 20 is, for example, a database managed on a provider side of the moving image distribution service, and retains information regarding the user U1, information regarding other users (including viewers) related to the user U1, and information regarding a relationship between the user U1 and other users (viewers and the like). In the description, these pieces of information are collectively referred to as user information.

Here, the information regarding the relationship between the user U1 and other users (viewers or the like) may include, for example, at least one of the degree of intimacy (such as a following relationship for an account) between the user U1 who is the contributor and other users (viewers or the like), a relationship between the user U1 and other users (viewers or the like) in the moving image content, and history information of other users (viewer or the like) for the moving image content contributed by the user U1 in the past. However, the present disclosure is not limited thereto, and various types of information regarding the relationship between the user U1 and other users (viewers or the like) may be included.

The event extraction unit 30 includes, for example, an image analysis unit 31 and a speech analysis unit 32, and extracts an event from the moving image content by analyzing an image and a speech in the moving image content generated by the user terminal 10. The extraction of the event will be described in detail later.

The comment generation unit 40 includes a position/target control unit 41, and generates a comment (text data) on the event extracted by the event extraction unit 30 based on the virtual commentator, the position, and the comment target selected by the user terminal 10. In other words, the comment generation unit 40 generates a comment to be uttered by the virtual commentator based on the information regarding the relationship between the user U1 and other users (viewers or the like). The generation of the comment will be described in detail later.

The utterance control unit 50 converts the comment (text data) generated by the comment generation unit 40 into sound data by using text-to-speech (TTS), for example.

For example, the avatar generation unit 60 generates an avatar of the selected virtual commentator based on the virtual commentator selected by the user terminal 10, and then, generates motion data for operating the avatar based on the position and the comment target of the selected virtual commentator, and the sound data generated by the utterance control unit 50.

The editing/rendering unit 70 renders the moving avatar generated by the avatar generation unit 60, and superimposes video data (hereinafter, also referred to as an avatar animation) generated by the rendering on video data of the moving image content. Furthermore, the editing/rendering unit 70 superimposes the sound data generated by the utterance control unit 50 on sound data of the moving image content. The editing/rendering unit 70 may digest the moving image content by editing the moving image content based on the event extracted by the event extraction unit 30, for example. The moving image content may be digested before or after the avatar animation and the sound data are superimposed.

The distribution unit 80 distributes the commented moving image content generated by the editing/rendering unit 70 to a terminal of the viewer via a predetermined network 90. The predetermined network may be various networks such as the Internet, a local area network (LAN), a wide area network (WAN), and a mobile communication system (including the 4th generation mobile communication system (4G)), the 4G-long term evolution (LTE), the 5th generation mobile communication system (5G), and the like).

### 1.5 Example of operation flow in case of adding comment at time of contribution (uploading)

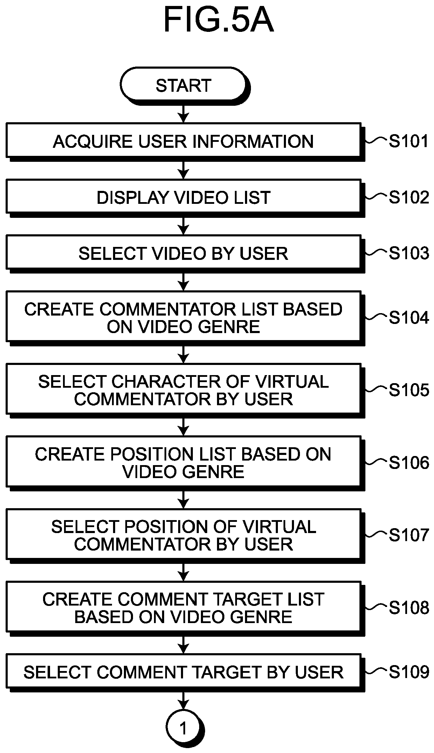

FIGS. 5A to 9C are diagrams illustrating an example of an operation flow in a case of adding a comment at the time of contributing (uploading) the moving image content (see FIG. 3A). A series of flows of this operation flow is illustrated in FIGS. 5A, 6A, 7A, and 9A. Further, in the description, a case where a voice comment is added to the moving image content is exemplified.

### 1.5.1 Example of operation from start of application to setting of virtual commentator

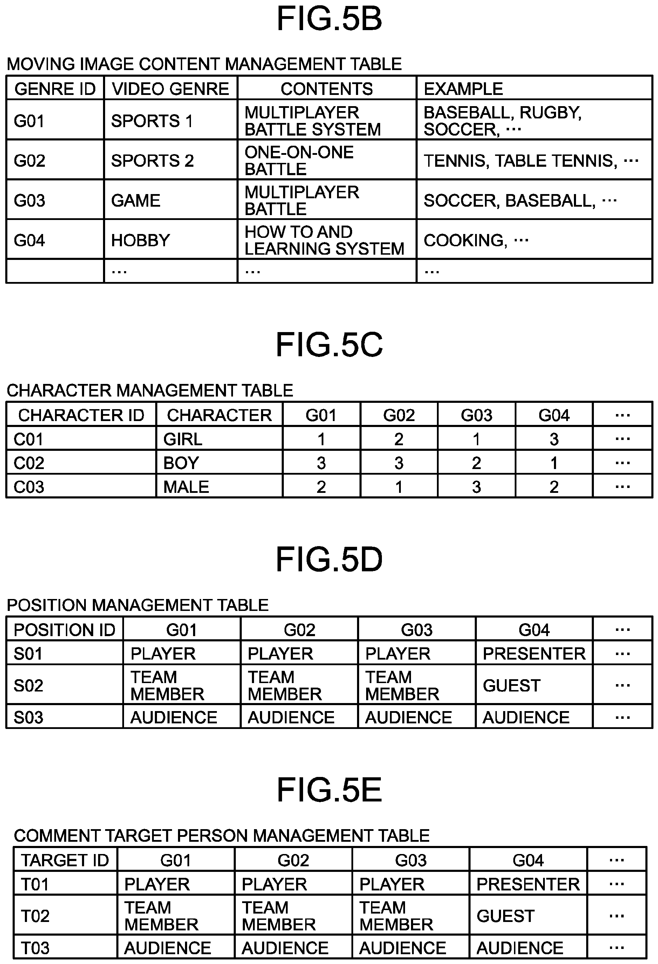

First, an operation until the user U1 starts the application on the user terminal 10 and sets the virtual commentator will be described. FIG. 5A is a flowchart illustrating an example of the operation until the user U1 starts the application on the user terminal 10 and sets the virtual commentator. Furthermore, FIGS. 5B to 5E are diagrams illustrating examples of management tables managed on the provider side that provides an automatic comment addition service via the application, FIG. 5B illustrates an example of a moving image content management table that manages moving image contents, FIG. 5C illustrates an example of a character management table that manages a character of a virtual commentator, FIG. 5D illustrates an example of a position management table that manages the position of a virtual commentator, and FIG. 5E illustrates an example of a comment target management table that manages a target (comment target) to which a virtual commentator utters a comment. In the description, it is assumed that the provider providing the moving image distribution service and the provider providing the automatic comment addition service are the same.

As illustrated in FIG. 5A, when the user U1 who is the moving image contributor starts the application on the user terminal 10, the application of the user terminal 10 (hereinafter, simply referred to as the user terminal 10) acquires the user information regarding the user U1 from the user information retention unit 20 (step S101). In other words, in this example, the user terminal 10 can function as an acquisition unit that acquires the information regarding a relationship between the user U1 who is the contributor of the moving image content and the viewers of the moving image content. The user information may include history information such as information regarding the moving image content uploaded by the user U1, and information regarding the moving image content to which the user U1 has added a comment using the application in the past, and the genre thereof, in addition to the information regarding the user U1 itself, information regarding other users (including viewers) related to the user U1, and the information regarding the relationship between the user U1 and other users as described above.

When the user information is acquired, the user terminal 10 acquires a list (also referred to as a video list) of moving image contents such as a live-action video captured by the user U1 or a game playing video based on the acquired user information, creates the moving image content selection screen G10 illustrated in FIG. 2A by using the acquired video list, and displays the moving image content selection screen G10 for the user U1 (step S102). In the video list on the moving image content selection screen G10, a moving image content of a genre that tends to receive substantial comments may be preferentially displayed based on the history information included in the user information.

In a case where the user U1 selects a moving image content to which a comment is to be added based on the moving image content selection screen G10 displayed on the user terminal 10 (step S103), the user terminal 10 acquires the genre (video genre) of the selected moving image content from meta information (hereinafter, referred to as video information) given to the selected moving image content. The video information may be, for example, tag information such as a title and a genre of the moving image content, a game name, or a dish name. Subsequently, the user terminal 10 acquires a genre ID of the selected moving image content by referring to the moving image content management table illustrated in FIG. 5B by using the acquired video genre. Then, the user terminal 10 acquires a list of virtual commentators for the selected moving image content and priorities thereof by referring to the character management table illustrated in FIG. 5C by using the acquired genre ID. Then, the user terminal 10 creates a list of virtual commentators selectable by the user U1 based on the acquired list of virtual commentators and the priorities thereof, and creates a commentator selection screen G20 illustrated in FIG. 2B by using the created list of the virtual commentators and displays the commentator selection screen G20 (step S104).

For example, in a case where the user U1 selects a moving image content of a soccer game, the genre ID is G03, and in a case where the user U1 selects a moving image content of cooking, the genre ID is G04. By referring to the character management table illustrated in FIG. 5C by using the genre ID specified based on the moving image content management table illustrated in FIG. 5B, the user terminal 10 acquires a commentator list for each genre ID and the priority of each virtual commentator, creates the commentator selection screen G20 in which icons (options) of the virtual commentators are listed according to the priority, and displays the commentator selection screen G20 for the user U1.

Here, the priority may be, for example, the order of the virtual commentator prioritized for each video genre. For example, in the example illustrated in FIG. 5C, in a case of a video genre of "game" (genre ID = G03), the priority of a character "girl" of a character ID = C01 is set to be the highest, the priority of a character "boy" of C02 is set to be the second highest, and the priority of a character "male" of C03 is set to be the third highest. Therefore, the characters are displayed in this order on the commentator selection screen G20.

As the priority setting rule, for example, various methods such as a method of setting characters (for example, a character who likes sports) suitable for each video genre on a rule basis, a method of setting the priority of each character based on a preference history of the user, and the like may be used.

When the user U1 selects the character of the virtual commentator by using the commentator selection screen G20 (step S105), the user terminal 10 refers to the position management table illustrated in FIG. 5D by using the genre ID to acquire a list of positions that can be set for the virtual commentator, generates a position selection screen G30 illustrated in FIG. 2C by using the acquired list of the positions, and displays the position selection screen G30 for the user U1 (step S106). For example, in a case where the genre ID = G03, a position ID = S01 is "player", S02 is "team member", and S03 is "friend". In addition, in a case where the genre ID = G04, the position ID = S01 is "presenter" who explains a dish, S02 is "guest" who performs tasting and the like, and S03 is "audience".

When the user U1 selects the position of the virtual commentator by using the position selection screen G30 (step S107), the user terminal 10 refers to the comment target management table illustrated in FIG. 5E by using the genre ID to acquire a list of comment targets to be targets of a comment, generates a comment target selection screen G40 illustrated in FIG. 2D by using the acquired list of the comment targets, and displays the comment target selection screen G40 for the user U1 (step S108). For example, in a case where the genre ID = G03, a target ID = T01 is "player", T02 is "team member", and T03 is "friend".

In this manner, the user terminal 10 sets the position of the virtual commentator and the comment target of the comment uttered by the virtual commentator, and notifies the event extraction unit 30 of the setting content. In steps S103, S105, and S107, a case where the user U1 selects each item has been exemplified, but the present disclosure is not limited thereto. For example, the user terminal 10 may be configured to automatically select each item based on the service definition, the user's preference, or the like.

### 1.5.2 Example of event extraction operation

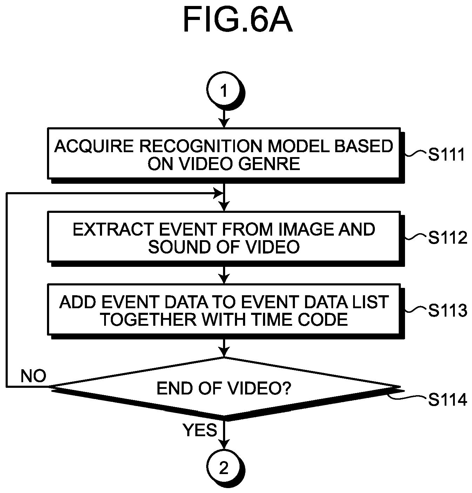

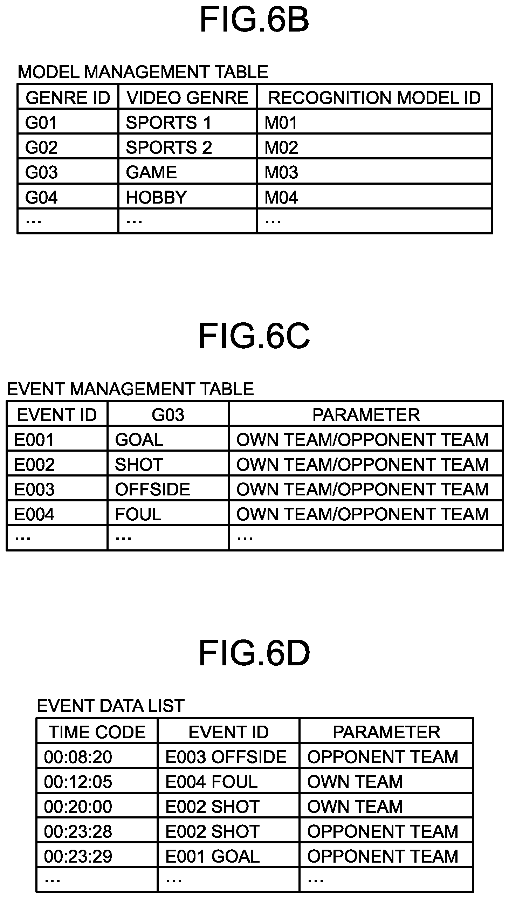

As described above, when the setting of the virtual commentator is completed, next, the event extraction unit 30 executes an operation of extracting an event from the moving image content selected by the user U1. FIG. 6A is a flowchart illustrating an example of an event extraction operation performed by the event extraction unit 30. Furthermore, FIGS. 6B and 6C are diagrams illustrating examples of management tables managed by the event extraction unit 30, FIG. 6B illustrates an example of a model management table for managing a recognition model used at the time of event extraction for each video genre, and FIG. 6C illustrates an example of an event management table for managing an event extracted from a moving image content for each recognition model. Furthermore, FIG. 6D is a diagram illustrating an example of a list of event data extracted in time series from the moving image content by the recognition model.

As illustrated in FIG. 6A, when the video genre (genre ID) specified in step S104 of FIG. 5A is acquired from user terminal 10, the event extraction unit 30 specifies a recognition model ID for identifying the recognition model associated with each video genre by referring to the model management table illustrated in FIG. 6B using the genre ID, and acquires the recognition model used for extracting an event by using the specified recognition model ID (step 5111). The recognition model for each genre may be constructed in advance on a rule basis or by machine learning, for example, and retained in the event extraction unit 30. For example, in a case where the genre ID = G03, the event extraction unit 30 selects a recognition model of a model ID = M03. The recognition model that can be generally used for each video genre may be a recognition model that covers the entire video genre, or may be a recognition model that covers a range classified more specifically than the classification by the video genre. For example, for a video genre of "sports 1", a recognition model specialized for more specific classification such as "for baseball", "for rugby", and "for soccer" may be prepared.

Next, the event extraction unit 30 extracts an event from the moving image content by inputting the moving image content to the acquired recognition model (step S112). More specifically, the event extraction unit 30 extracts an event by analyzing a feature of the video, movement of a person or a ball recognized by the recognition model, a feature point extracted from the image data such as a data indicator (score or the like) in the screen, a keyword recognized from the sound data, and the like. The event according to the present embodiment may be defined for each small genre such as "baseball" or "soccer" or for each specific game name, instead of a large genre such as "sports". For example, in a case of a soccer game, an event ID = E001 is "goal" and an event ID = E002 is "shot", that is, a representative technique, score, file, or the like may be defined as the event. In addition, the extracted event may include a parameter indicating whether the extracted event is the event of the own team or the event of the opponent team. Furthermore, information such as the name and uniform number of a player who has caused each event, a ball position, and the total point may be acquired as a part of the event.

When the event is extracted as described above, the event extraction unit 30 generates the event data together with a time code indicating a time at which the event occurs in the moving image content, and adds the generated event data to the event data list illustrated in FIG. 6D (step S113) .

Then, the event extraction unit 30 repeatedly performs the event extraction operation as described above up to the end of the moving image content (NO in step S114) .

### 1.5.3 Example of comment generation operation

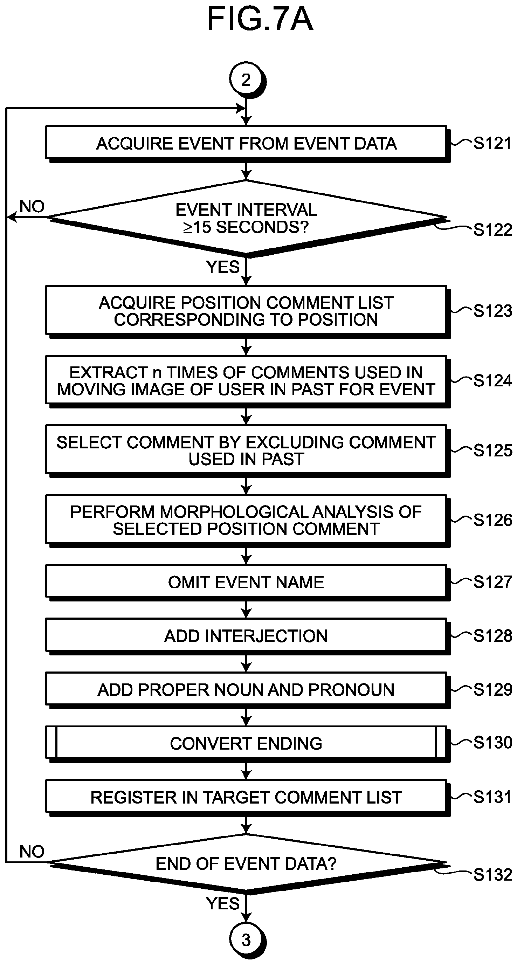

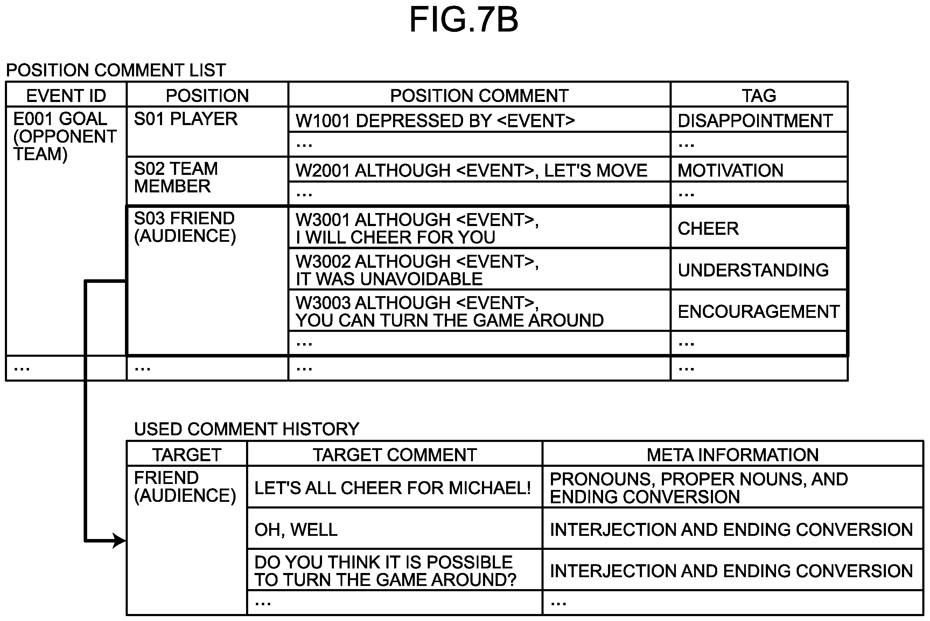

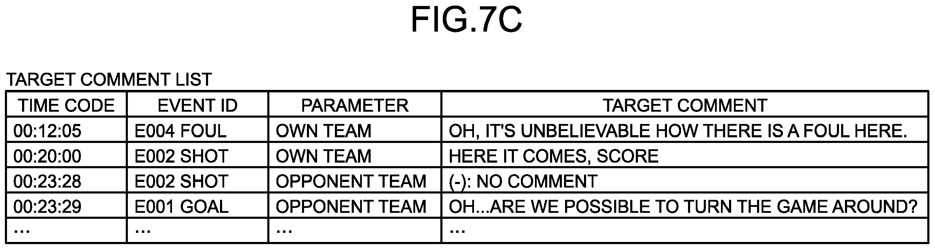

As described above, when the event data list is created based on the moving image content, next, the comment generation unit 40 performs an operation of generating a comment (text data) for each event based on the virtual commentator selected by the user U1, the position and the comment target of the virtual commentator. FIG. 7A is a flowchart illustrating an example of a comment generation operation performed by the comment generation unit 40. Furthermore, FIG. 7B is a diagram illustrating an example of a management table managed by the comment generation unit 40, and illustrates an example of a list (position comment list) of comments for each position of the virtual commentator with respect to each event and an example of a used comment history for managing a history of comments used in the past for each position with respect to each event. Furthermore, FIG. 7C is a diagram illustrating an example of a list of comments (target comment list) for each event generated by the comment generation unit 40.

As illustrated in FIG. 7A, when the event data list created in step S113 of FIG. 6A is acquired from the event extraction unit 30, the comment generation unit 40 acquires the event data from the event data list in chronological order (step S121). The acquisition of the event data in chronological order may be performed, for example, based on the time code.

Here, in a case where the events occur successively, it may be difficult to add a comment to all the events. In such a case, as in step S122, the comment generation unit 40 may perform filtering on the event data list. For example, the comment generation unit 40 may obtain a time interval between the events based on the time code of the event data list, and for an event that occurs within a predetermined time interval (for example, 15 seconds) (NO in step S122), the comment generation unit 40 returns to step S121 without generating a comment, and acquires an event of the next time code. At this time, priorities (for example, a goal is prioritized over a foul) may be assigned to the events, and events with low priorities may be preferentially excluded. However, the present disclosure is not limited thereto, and a configuration may be adopted in which events are distributed to a plurality of virtual commentators without filtering, and the respective virtual commentators utter comments for the distributed events.

Next, the comment generation unit 40 acquires a comment list corresponding to the position of the virtual commentator for each event by referring to the position comment list illustrated in FIG. 7B based on the event ID in the event data acquired in step S121 and the position set for the virtual commentator (step S123). For example, in a case where the event ID = E001 (goal (opponent team)), as in the position comment list illustrated in FIG. 7B, one or more variations of comments that may be thought by a person at the position when a goal is scored are listed. The position comment list may be created on a rule basis or may be created using machine learning or the like. In addition, each comment may be designed to be universally used for events. For example, each comment may be attached with a tag that clearly indicates the content, such as a "disappointment" tag if the comment is "depressed" and a "encouragement" tag if the comment is "you can turn the game around". The tag may be used, for example, when adding variations to a comment, and a plurality of tags may be attached to one comment. In FIG. 7B, text to be replaced according to the event is surrounded by "<>". For example, a comment W1001 can be reused by inserting an event name in <event> like "depressed by the goal of the opponent team" or "depressed by the shot of the opponent team".

Furthermore, the comment generation unit 40 extracts n times (n is an integer of 1 or more) of comments used in the past for the same user U1 by referring to the used comment history for the comment list acquired in step S123 (step S124). The comment used for the same user U1 in the past may be any one or both of a comment used for a moving image content different from the moving image content currently being processed and a comment used for the same moving image content.

Next, the comment generation unit 40 selects one of comments (hereinafter, a comment corresponding to the position is referred to as a position comment) obtained by excluding the comments of n times acquired in step S124 from the comment list acquired in step S123 (step S125). In step S125, for example, the position comment may be randomly selected using a pseudo random number or the like, or the position comment may be selected according to the order of the comment list from which the past comments of n times are excluded. In this way, by controlling the same comment in such a way as not to overlap or be frequently used based on the history of the comments used in the past, it is possible to suppress the user U1 or the viewer from becoming bored with the comment of the virtual commentator. In step S124, each of the event and the comment may be vectorized and selected from the closest candidates.

Next, the comment generation unit 40 analyzes the position comment selected in step S125 by performing morphological analysis or the like (step S126). Subsequently, the comment generation unit 40 omits an event name included in the position comment (step S127). This is because, in a case where it is assumed that the viewer recognizes the occurrence of an event from the video, it is possible to make a comment with a better tempo by omitting the event name. However, in a case where the virtual commentator is a character such as an announcer that needs to speak correctly, omission of the event name (step S127) may be skipped.

Next, the comment generation unit 40 adds an exclamation to the position comment (step S128). For example, an exclamation expressing expectation such as "Here it comes!" is added to a shooting scene of the own team, and an exclamation indicating disappointment such as "Oh..." is added to a goal scene of the opponent team, so that it is possible to encourage empathy of the comment target.

Next, the comment generation unit 40 acquires a proper noun such as a player name, a team name, or a nickname, a pronoun, or the like from the moving image content or the user information retention unit 20, and adds the acquired proper noun or pronoun to the position comment (step S129). This makes it possible to give a feeling of closeness to the comment target.

Next, the comment generation unit 40 converts an ending of the position comment into one suitable for a call to the target (step S130). For example, "although <event>, I will cheer for you" of the "position comment" is converted into "Let's all cheer for George!". As a result, it is possible to make a more natural call to the comment target person. In a case of a language in which an expression of a relationship between the users (for example, the presence or absence of "please") appears at a position other than the end of a sentence like English, the processing of step S130 may be executed as conversion of a portion other than the ending.

As described above, in steps S127 to S130, the comment generation unit 40 corrects the generated position comment based on the information regarding the relationship between the user U1 and other users (viewers or the like).

Next, the comment generation unit 40 adds the event ID, the parameter, and the time code to the position comment and registers the resulting position comment in the target comment list illustrated in FIG. 7C (step S131). The added time code may be a time code included in the corresponding event data.

Then, the comment generation unit 40 repeatedly performs this operation (NO in step S132) until the generation of the comment for all the pieces of event data is completed (YES in step S132).

In this example, the position comment is generated for each event after the event data list is created based on the entire moving image content, but the present disclosure is not limited thereto, and for example, the position comment may be generated every time an event is extracted from the moving image content.

### 1.5.3.1 Modified example of ending conversion

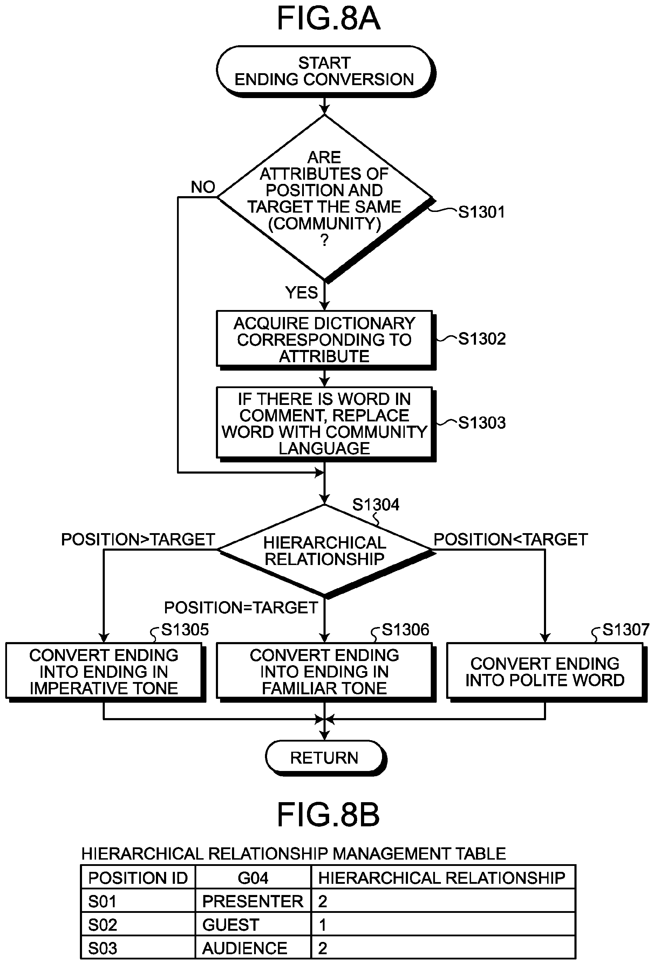

Here, a modified example of the ending conversion described in step S130 of FIG. 7A will be described. In the ending conversion of step S130, for example, the ending of the position comment is converted based on the relationship between the user U1 (player) and the viewers in a community, a hierarchical relationship, or the like, so that the comment target can feel more familiar, or the wording can be adapted to the relationship between the user U1 (player) and the viewer, a relationship between virtual commentators in a case where there are a plurality of virtual commentators, or the like. FIG. 8A is a flowchart illustrating an example of an ending conversion operation according to the present modification. FIG. 8B is a diagram illustrating an example of a management table managed by the comment generation unit 40, and illustrates an example of a hierarchical relationship management table for managing a hierarchical relationship between the positions of the virtual commentators. Here, the ending conversion for a language in which the expression of the relationship between the users appears at the end of a sentence is described. However, in a case of a language in which the expression of the relationship between the users (for example, the presence or absence of "please") appears at a position other than the end of a sentence like English, the processing of step S130 may be executed as conversion of a portion other than the ending.

As illustrated in FIG. 8A, the comment generation unit 40 first checks attributes of the selected position and comment target from the characteristics of the service used by the user U1 and the user information, and determines whether or not the attributes of the selected position and comment target are the same (step S1301). The same attribute indicates a case where the service has a limited viewer age (only female high school students or the like), the occupation is limited like only doctors or teachers, or the community likes a specific game as indicated by the user information. In a case where the selected position and comment target have the same attribute (YES in step S1301), the comment generation unit 40 proceeds to step S1302. On the other hand, in a case where the selected position and comment target have different attributes (NO in step S1301), the comment generation unit 40 proceeds to step S1304.

In step S1302, the comment generation unit 40 acquires a dictionary corresponding to the attribute specified in step S1301. This is because, in a case where the selected position and comment target have the same attribute, it is desirable to use a dictionary corresponding to the attribute since it is desirable to use a popular word frequently used in the community, a technical term, or the like in the comment. The dictionary may be fad words, buzzwords, technical terms, or the like, or a corpus collected from a community social networking service (SNS) or the like. Furthermore, the dictionary may be retained in advance by the comment generation unit 40, or may be used as a dictionary by searching information on a network such as the Internet in real time.

Next, if there is a word corresponding to a community language, the comment generation unit 40 replaces a word in the position comment with the word corresponding to the community language (step S1303).

Next, the comment generation unit 40 checks the hierarchical relationship between the selected position and comment target by referring to the hierarchical relationship management table illustrated in FIG. 8B (step S1304). In the hierarchical relationship management table, a hierarchical relationship is defined as a position setting parameter. For example, in a cooking moving image content whose video genre belongs to "hobby", a level of a presenter in the hierarchical relationship is "2 (middle)", a level of a guest is "1", which the highest level, and a level of an audience is "2", which is the same as the presenter.

The comment generation unit 40 converts the ending of the position comment into an ending in an imperative tone (step S1305) in a case where the level of the position of the virtual commentator is higher than that of the comment target ("position > target" in step S1304), the comment generation unit 40 converts the ending of the position comment into an ending in a familiar tone in a case where the levels of the position and the comment target are the same as each other ("position = target" in step S1304), converts the ending of the position comment into the ending of the familiar word (step S1306), and the comment generation unit 40 converts the ending of the position comment into a polite word in a case where the level of the position is lower than that of the comment target ("position < target" in step S1304) (step S1307). Thereafter, the comment generation unit 40 returns to the operation illustrated in FIG. 7A.

### 1.5.4 Example of generation operation and distribution operation for commented moving image content

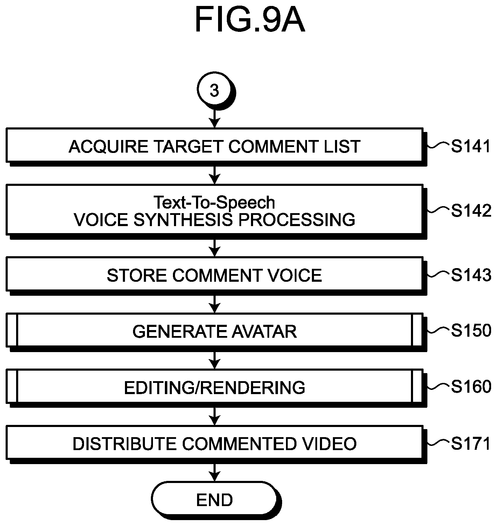

Next, an example of an operation of generating a commented moving image content by using the position comment generated as described above and an operation of distributing the generated commented moving image content will be described. FIG. 9A is a flowchart illustrating an example of the generation operation and the distribution operation for the commented moving image content. The comment data and the avatar animation may be distributed to the user U1 and the viewer as data different from the moving image content. In this case, for example, step S160 may be omitted.

As illustrated in FIG. 9A, when the target comment list created in step S131 of FIG. 7A is acquired from the comment generation unit 40 (step S141), the utterance control unit 50 converts the position comment into the sound data (also referred to as a comment voice) by performing voice synthesis processing using TTS on the text data of each position comment in the target comment list (step S142), and stores the generated comment voice of each position comment (step S143).

Furthermore, the avatar generation unit 60 executes avatar generation processing of generating the avatar animation of the virtual commentator (step S150).

Next, the editing/rendering unit 70 executes editing/rendering processing of generating the commented moving image content based on the moving image content, the comment voice, and the avatar animation (step S160).

The commented moving image content generated in this way is distributed from the distribution unit 80 to the user U1 and the viewer via the predetermined network 90 (step S171), and then this operation ends.

### 1.5.4.1 Example of avatar generation processing

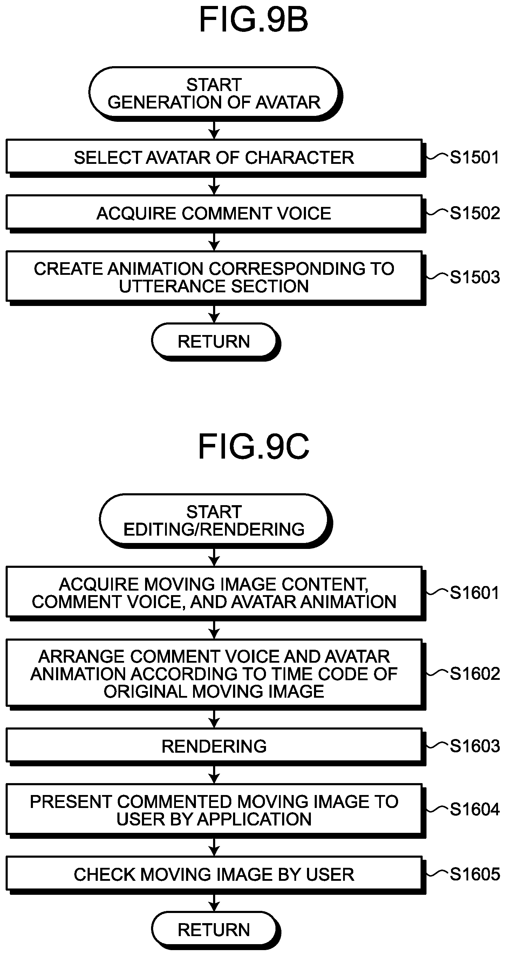

Here, the avatar generation processing described in step S150 of FIG. 9A will be described in more detail. FIG. 9B is a flowchart illustrating an example of an operation flow of the avatar generation processing.

As illustrated in FIG. 9B, the avatar generation unit 60 selects a corresponding avatar from the characters of the virtual commentator selected by the user U1 in step S105 of FIG. 5A (step S1501). Furthermore, the avatar generation unit 60 acquires the comment voice generated by the utterance control unit 50 (step S1502).

Then, the avatar generation unit 60 creates an animation of moving the avatar selected in step S1501 in accordance with an utterance section of the comment voice (step S1503), and returns to the operation illustrated in FIG. 9A. In step S1503, a realistic avatar animation may be generated by learning how to open the mouth according to the utterance.

### 1.5.4.2 Example of editing/rendering processing

Furthermore, the editing/rendering processing described in step S160 of FIG. 9A will be described in more detail. FIG. 9C is a flowchart illustrating an example of an operation flow of the editing/rendering processing.

As illustrated in FIG. 9C, the editing/rendering unit 70 first acquires the moving image content selected by the user U1 in step S103 of FIG. 5A, the comment voice stored in step S143 of FIG. 9A, and the avatar animation created in step S150 of FIG. 9A (step S1601).

Next, the editing/rendering unit 70 arranges the comment voice and the avatar animation on the moving image content in accordance with the time code (step S1602), and generates the commented moving image content by rendering the moving image content on which the comment voice and the avatar animation are arranged (step S1603). The text data of the position comment may be arranged as a subtitle in the moving image content.

The commented moving image content generated in this manner may be distributed to the user U1 in advance via the distribution unit 80 for confirmation by the user U1 (player) before being distributed to the viewer (step S164). Therefore, when the confirmation (distribution approval) by the user U1 is obtained via a communication unit (not illustrated) or the like (step S165), this operation returns to the operation illustrated in FIG. 9A.

### 1.6 Example of dynamically changing position/comment target

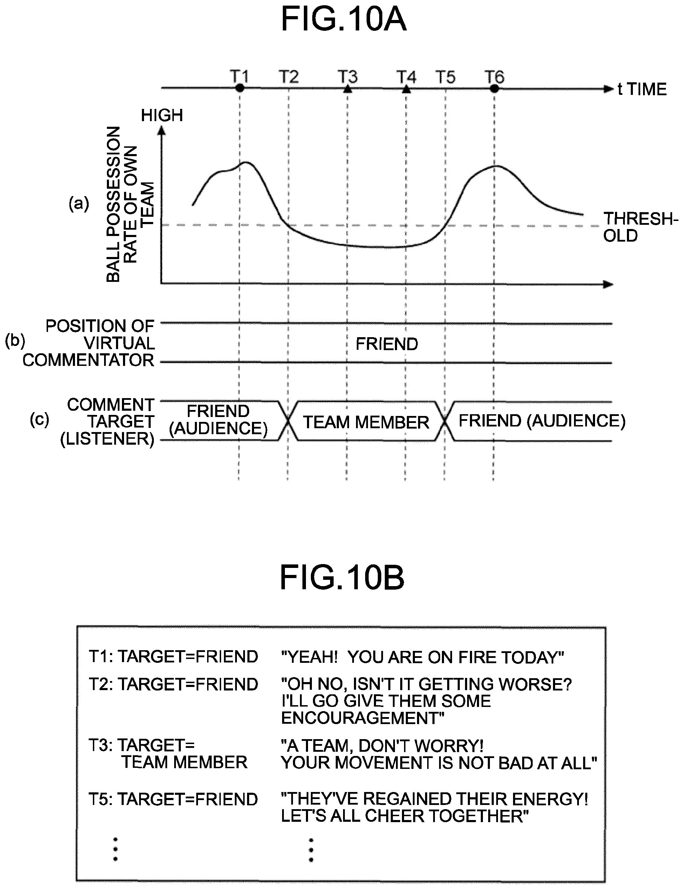

The position selected in step S107 and the comment target selected in step S109 in FIG. 5A may change in the moving image content. FIG. 10A is a diagram for describing an example of a case where the comment target is changed in the moving image content. FIG. 10A illustrates a case where the position and/or the comment target of the virtual commentator is dynamically changed based on a change in ball possession rate of the own team with the lapse of time in a soccer game. Furthermore, FIG. 10B is a diagram illustrating an example of a comment uttered by the virtual commentator at each time in FIG. 10A.

In FIG. 10A, (a) illustrates a graph of the ball possession rate of the own team, (b) illustrates transition of the position of the virtual commentator, and (c) illustrates transition of the comment target. The ball possession rate can be acquired by, for example, image analysis for the moving image content, an open API of a game, or the like. "Friend" is selected as the initial position of the virtual commentator, and "Friend" is also selected as the initial comment target.

At time T1, the own team has scored and the ball possession rate of the team is also high, so that the comment target remains "friend". Therefore, as illustrated in FIG. 10B, at time T1, the virtual commentator comments "Yeah! You are on fire today!" to a friend.

At time T2, the ball possession rate is lower than a preset threshold (for example, 50%). The position/target control unit 41 of the comment generation unit 40 switches the comment target from "friend" to "team member" after giving a comment "Oh no, isn't it getting worse? I'll go give them some encouragement" to the friend at a timing (time T2) when the ball possession rate falls below the threshold. Therefore, the comment generation unit 40 operates to give a comment to the team member during a period in which the comment target is "team member".

When losing a goal at time T3, the virtual commentator gives an encouraging comment to the team member as "A team (team name), don't worry! Your movement is not bad at all".

Thereafter, when the ball possession rate exceeds the threshold at time T5, the position/target control unit 41 switches the comment target from "team member" to "friend". Therefore, the comment generation unit 40 operates to generate a comment to be given to the friend after time T5.

### 1.6.1 Example of operation flow

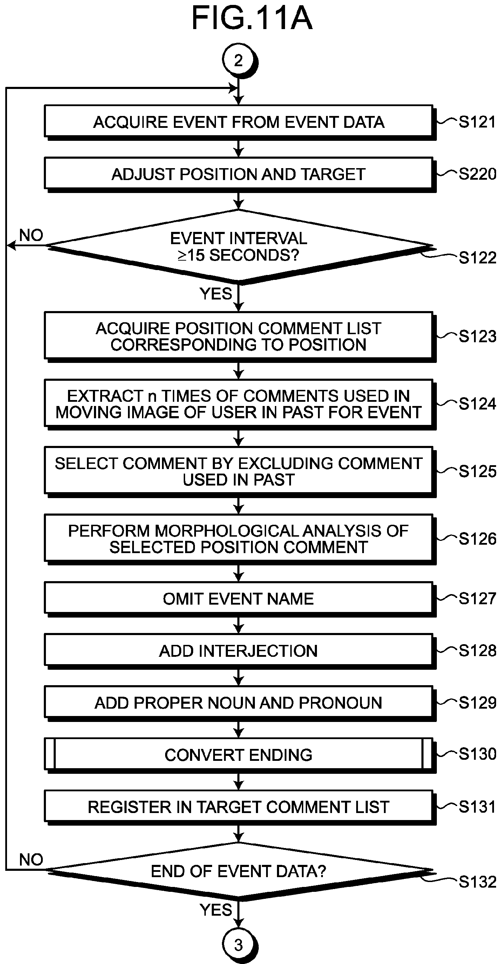

FIG. 11A is a flowchart illustrating an example of a comment generation operation performed by the comment generation unit 40 in a case where the position/comment target is dynamically changed. FIG. 11A illustrates an operation example in a case where a step of dynamically changing the position/comment target is incorporated in the operation illustrated in FIG. 7A. Furthermore, in this example, it is assumed that the event extracted by the event extraction unit 30 includes the ball possession rate exceeding the threshold and falling below the threshold.

As illustrated in FIG. 11A, in a case where the position/comment target is dynamically changed, when the event data is acquired from the event data list in a predetermined order in the operation illustrated in FIG. 7A (step S121), the position/target control unit 41 of the comment generation unit 40 executes processing of adjusting the position and/or comment target of the virtual commentator (step S220).

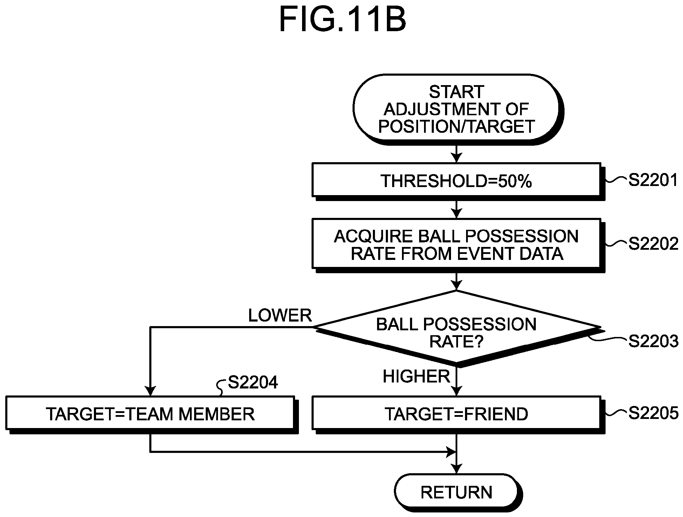

FIG. 11B is a flowchart illustrating a more detailed operation flow of the position/target adjustment operation illustrated in step S220 of FIG. 11A. As illustrated in FIG. 11B, in step S220 of FIG. 11A, the position/target control unit 41 first sets the threshold for the ball possession rate (step S2201). Next, the position/target control unit 41 acquires the ball possession rate of the own team based on, for example, the event ID and the parameter in the event data acquired in step S121 (step S2202).

Next, in a case where the ball possession rate of the own team acquired in step S2202 falls below the threshold set in step S2201 ("lower" in step S2203), the position/target control unit 41 switches the comment target to "team member" and returns to the operation illustrated in FIG. 11A. On the other hand, in a case where the ball possession rate of the own team exceeds the threshold ("higher" in step S2203), the position/target control unit 41 switches the comment target to "friend" and returns to the operation illustrated in FIG. 11A. Thereafter, the comment generation unit 40 performs the same operation as the operation after step S122 of FIG. 7A.

In FIGS. 10A to 11B, a case where the comment target is mainly changed has been exemplified, but similarly, the position of the virtual commentator or both the position and the comment target may be changed. For example, in an active learning workshop video, the position of a team member of a team having the lowest degree of activity may be set as the position of the virtual commentator based on the degree of activity (such as the amount of conversation) of each team, and the virtual commentator may be caused to make a comment for the team member in order to activate the team. Such a change in position and/or comment target is effective not only for archived contents but also for a real-time online class or the like.

### 1.7 Example of generating comment based on emotion value

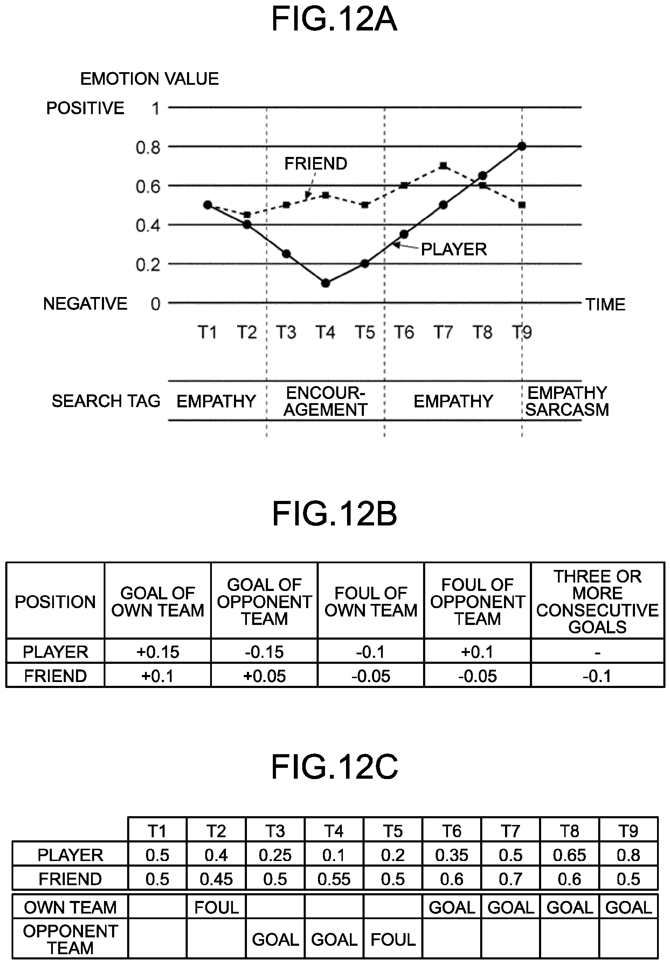

The comment generation unit 40 according to the present embodiment may change a comment to be generated based on an emotion value, for example, in addition to the event and the position. FIG. 12A is a diagram for describing an example of a case where a comment is generated based on the emotion value. FIG. 12B is a table illustrating the amount of change in emotion value for each position with respect to each event, and FIG. 12C is a diagram for describing a change in emotion value illustrated in FIG. 12A in association with the event.

As classification of emotions, there are various models such as Russell's model and Prussian model, but in the present embodiment, a simple positive/negative emotion is applied. In the present embodiment, the emotion value is mapped to a numerical value of 0 and 1, and 1 is defined as the most positive emotion and 0 is defined as the most negative emotion.

As illustrated in FIG. 12B, for example, in a case where the position is "player", the emotion value increases by 0.15 (becomes positive) due to the goal of the own team, and decreases by 0.15 (becomes negative) due to the goal of the opponent team. Furthermore, in a case where the position is "friend", the emotion value increases by 0.1 due to the goal of the own team, but the emotion value also increases by 0.05 when the opponent team scores a goal since the game becomes interesting. Furthermore, in a case where the goal of either team continues three times or more, the game becomes monotonous and not interesting. Therefore, in a case where the position is "friend", the emotion value decreases by 0.1.

The amount of change in emotion value illustrated in FIG. 12B may be defined on a rule basis from a general emotion or may be a value acquired by sensing the user U1 or the like.

FIGS. 12A and 12C illustrate an example in which the own team fouls at time T2, the opponent team scores a goal at times T3 and T4, the opponent team fouls at time T4, and the own team scores a goal at times T6 to T9. At time T0, which is a start time point, the initial emotion values of "player" and "friend" are set to 0.5.

As illustrated in FIGS. 12A and 12C, it can be seen that as a result of changing the emotion value of each of the positions due to a goal or a foul of the own team or the opponent team, a timing at which the emotion values match and a timing at which a difference occurs in emotion value occur.

### 1.7.1 Example of operation flow

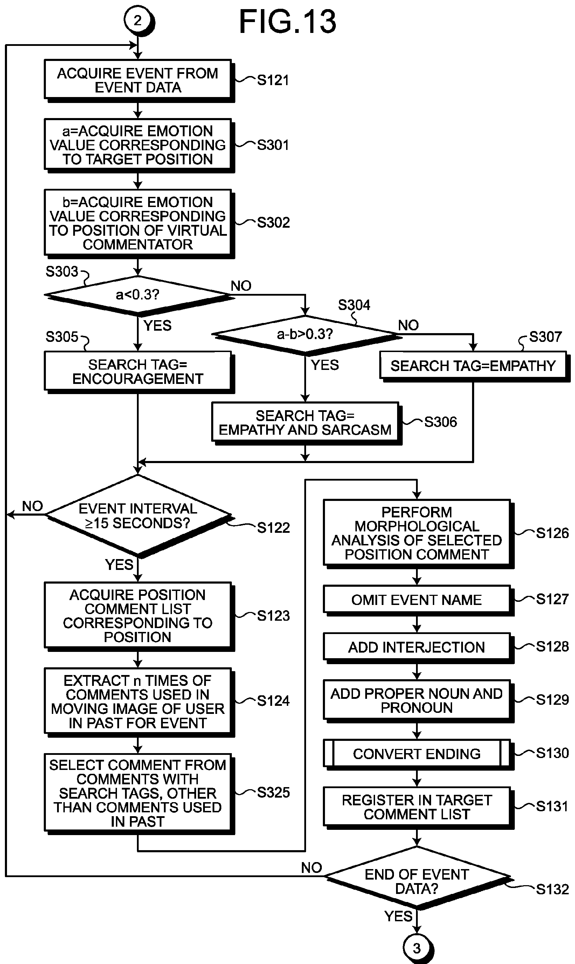

FIG. 13 illustrates an operation flow of comment generation in a case where the position of the virtual commentator is "friend" and the comment target is "player". In FIG. 13, the same operations as those in FIG. 7A are denoted by the same reference numerals, and a detailed description thereof will be omitted.

As illustrated in FIG. 13, in a case where the comment is generated based on the emotion value, when the event data is acquired from the event data list in a predetermined order in the operation illustrated in FIG. 7A (step S121), the comment generation unit 40 acquires an emotion value a of "player" that is the comment target included in the event data (step S301), and also acquires an emotion value b of "friend" that is the position of the virtual commentator (step S302).

Next, the comment generation unit 40 determines whether or not the emotion value a of the comment target is smaller than a threshold (for example, defined as 0.3) of a negative state (step S303), and in a case where the emotion value a is smaller than the threshold (YES in step S303), the comment generation unit 40 sets "encouragement" as a search tag for the position comment list illustrated in FIG. 7B (step S305), and proceeds to step S122.

Furthermore, in a case where the emotion value a of the comment target is equal to or larger than the threshold of the negative state (NO in step S303), the comment generation unit 40 determines whether or not an absolute value (|a-b|) of a difference between the emotion values of the comment target and the virtual commentator is larger than a threshold (for example, defined as 0.3) (step S304). In a case where the absolute value of the difference between the emotion values is larger than the threshold (YES in step S304), the comment generation unit 40 sets "empathy" and "sarcasm" as the search tags (step S306), and proceeds to step S122.

On the other hand, in a case where the absolute value of the difference between the emotion values is equal to or smaller than the threshold (NO in step S304), the comment generation unit 40 sets "empathy" as the search tag (step S307), and proceeds to step S122.

Next, after executing steps S122 to S124, the comment generation unit 40 selects one of the position comments to which the search tag set in step S305, S306, or S307 is attached among the position comments obtained by excluding the comments of n times acquired in step S124 from the comment list acquired in step S123 (step S325). In step S325, similarly to step S125, for example, the position comment may be randomly selected using a pseudo random number or the like, or the position comment may be selected according to the order of the comment list from which the past comments of n times are excluded.

Thereafter, the comment generation unit 40 creates the target comment list by performing the same operation as steps S126 to S132 illustrated in FIG. 7A.

In this way, by limiting a selection range of the position comment based on the emotion value, in other words, by narrowing down candidates of the position comment using the search tag set based on the emotion value, it is possible to generate a comment better reflecting the emotion of a player, a friend, or the like. For example, by setting "encouragement" as the search tag, it is possible to generate a comment encouraging a player who is disappointed due to the negative state like "Don't worry, it's just the beginning. You can make a comeback!". In addition, by setting "empathy" as the search tag, it is possible to generate a comment empathizing with a disappointed player like "It's tough, I know how you feel!". Furthermore, by setting both "empathy" and "sarcasm" as the search tags, it is also possible to generate a comment representing a complicated psychological state. For example, it is possible to express a sarcasm to a player with a continuous very positive goal like "Impressive. Is it because of the difference in PC specs, perhaps?" from the standpoint of a friend who is actually feeling boring because of monotonous play, although the comment is praising, the comment also means that it may be because of the difference in machine. In this way, it is possible to generate a more human comment by generating a comment based on the relationship between emotions.

The definition of the emotion value for the event illustrated in FIG. 12B may change. For example, there may be a tendency that a beginner is happy even when scoring with a simple technique, but a skilled person is happy only when scoring with a difficult technique. Therefore, the skill proficiency level may be acquired from information such as the use time of the user and the number of trophies in the game, and an emotion estimation model in which the emotion value (up rate) for a simple technique gradually decreases and the emotion value for a complicated technique gradually increases may be created.

### 1.8 System configuration example in case of adding comment at time of viewing (downloading)

Next, a case where a comment is added at the time of viewing (downloading) the moving image content (see FIG. 3B) will be described below.

In a case of adding a comment at the time of viewing (downloading) the moving image content, it is possible to generate a comment better reflecting the taste and situation of the viewer than in a case of adding a comment at the time of contributing (uploading) the moving image content. The selection of the moving image content to be viewed by the viewer may be performed, for example, by the viewer starting the application on the terminal and using the moving image content selection screen G10 (see FIG. 2A) displayed by the application. Similarly to the case of adding a comment at the time of contributing (uploading) the moving image content, the viewer can select the character, the position, and the comment target of the virtual commentator (see FIGS. 2B to 2D). However, in the description, a case will be exemplified where the degree of intimacy is recognized from information regarding the viewer and the moving image contributor (the user U1 in the description), and the character, the position, and the comment target of the virtual commentator are automatically set.

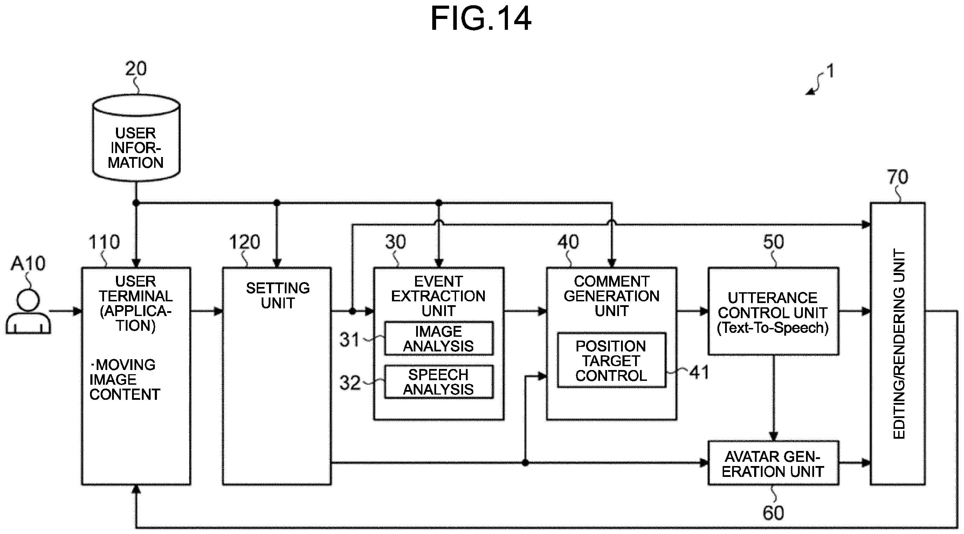

FIG. 14 is a block diagram illustrating a system configuration example in a case where a comment is added at the time of viewing (downloading) the moving image content. In the description, a case where a voice comment is added to the moving image content is exemplified as in FIG. 4.

As illustrated in FIG. 14, in the system configuration example of the information processing system 1 in a case of adding a comment at the time of viewing (downloading) the moving image content, a setting unit 120 is added, the distribution unit 80 is omitted, and the user terminal 10 is replaced with a user terminal 110 of a viewer A10 in a configuration similar to the system configuration example in a case of adding a comment at the time of contributing (uploading) the moving image content described with reference to FIG. 4.

Similarly to the user terminal 10, the user terminal 110 is, for example, an information processing device on the viewer A10 side, such as a smartphone, a personal computer, or a game console, and an application for reproducing the moving image content, automatically adding a comment, or the like. Furthermore, the user terminal 110 includes a communication unit (not illustrated), and acquires the user information retained by the user information retention unit 20 and the moving image content to which a comment is to be added via the communication unit.

When receiving selection of the moving image content to which a comment is to be added sent from the user terminal 110, the setting unit 120 sets the position and the comment target of the virtual commentator based on the video information of the selected moving image content and the user information of the user U1 and the viewer A10 acquired from the user information retention unit 20. In other words, in this example, the setting unit 120 can function as the acquisition unit that acquires the information regarding a relationship between the user U1 who is the contributor of the moving image content and the viewers of the moving image content. Furthermore, the setting unit 120 sets the position of the virtual commentator and the comment target of the comment uttered by the virtual commentator, and notifies the event extraction unit 30 of the setting content. As described in FIGS. 2B to 2D, 5A, and the like, in a case where the viewer A10 manually sets the character, the position, and the comment target of the virtual commentator, the setting unit 120 may be omitted.

Other configurations may be similar to the system configuration example of the information processing system 1 illustrated in FIG. 4, and thus, a detailed description thereof will be omitted here.

### 1.9 Example of operation flow in case of adding comment at the time of viewing (downloading)

An operation flow in a case of adding a comment at the time of viewing (downloading) may be basically similar to the operation flow in a case of adding a comment at the time of contributing (uploading) the moving image content described above with reference to FIGS. 5A to 9C. However, in a case where a comment is added at the time of viewing (downloading), steps S164 and S165 of FIG. 9C are omitted, and step S171 of FIG. 9A is replaced with reproduction of the commented moving image content.

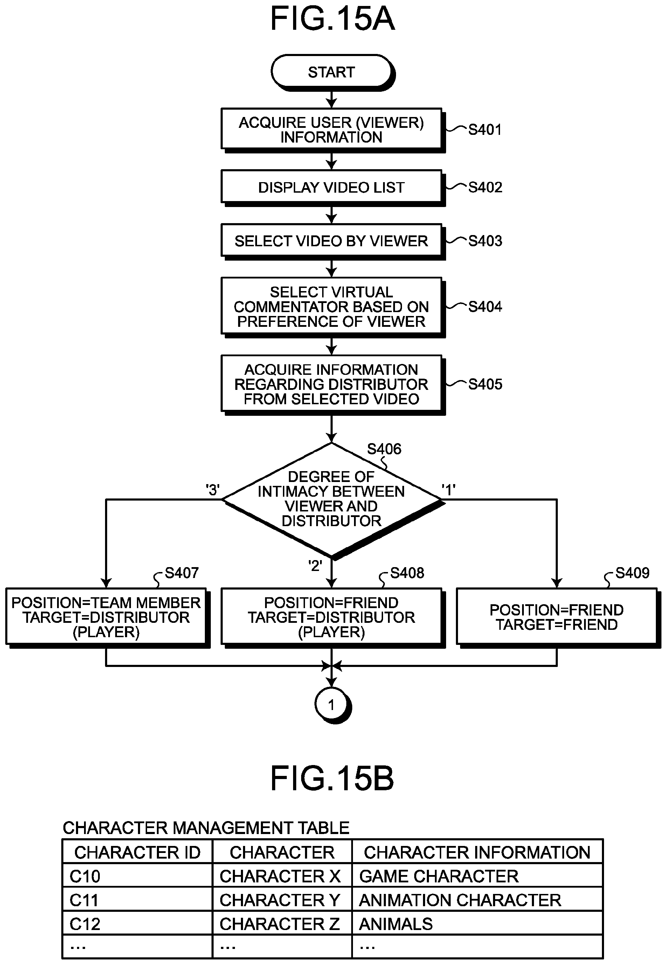

Furthermore, in the description, as described above, a case where the degree of intimacy is recognized from the information regarding the viewer A10 and the moving image contributor (the user U1 in the description), and the character, the position, and the comment target of the virtual commentator are automatically set is exemplified. Therefore, the operation illustrated in FIG. 5A is replaced with the operation illustrated in FIG. 15A. Furthermore, FIG. 15B is a diagram illustrating an example of a management table managed on the provider side providing the automatic comment addition service via the application, and illustrates an example of a character management table for managing the character of the virtual commentator. In the description, similarly to the above description, it is assumed that the provider providing the moving image distribution service and the provider providing the automatic comment addition service are the same.

As illustrated in FIG. 15A, when the user (viewer) A10 starts the application on the user terminal 110, the application of the user terminal 110 (hereinafter, simply referred to as the user terminal 110) acquires the user information regarding the viewer A10 from the user information retention unit 20 (step S401). Similarly to the user information of the user U1, the user information may include history information such as a viewing history of the viewer A10 and information regarding a video genre or a genre of a game or the like preferred by the viewer A10 in addition to the information regarding the viewer A10 himself/herself, information regarding other users (including the user U1) related to the viewer A10, and information regarding a relationship between the viewer A10 and other users.

When the user information is acquired, the user terminal 110 acquires a list (video list) of moving image contents that can be viewed by the viewer A10 based on the acquired user information, creates the moving image content selection screen G10 illustrated in FIG. 2A by using the acquired video list, and displays the moving image content selection screen G10 for the viewer A10 (step S402). In the video list on the moving image content selection screen G10, a video of a genre that tends to receive substantial comments may be preferentially displayed based on the history information included in the user information. In a case where a comment addition function is implemented as one function of a game application, a moving image reproduction application, a moving image distribution application, or a social networking service (SNS) application capable of handling a moving image content, the moving image content to which text is to be added may be selected by displaying an indicator for inquiring the user whether or not to add a comment to the moving image content that is being reproduced or displayed instead of the moving image content selection screen G10.

When the viewer A10 selects the moving image content to which the comment is to be added based on the moving image content selection screen G10 displayed on the user terminal 110 (step S403), the user terminal 110 notifies the setting unit 120 of the selected moving image content. The setting unit 120 acquires the genre (video genre) of the selected moving image content from the meta information (video information) given to the moving image content sent from the user terminal 110, and acquires the genre ID of the selected moving image content by referring to the moving image content management table illustrated in FIG. 5B using the acquired video genre. Subsequently, the setting unit 120 acquires the history information of the viewer A10 from the user information acquired in step S401, and matches the acquired history information with character information of the virtual commentator managed in the character management table illustrated in FIG. 15B, thereby automatically selecting the virtual commentator matching the preference of the viewer A10 and the moving image content (step S404). For example, if the viewer A10 likes animation, the setting unit 120 selects an animation character (character Y) with a character ID = C11.

Next, the setting unit 120 acquires the user information of the user U1 who has uploaded the moving image content selected in step S403 to the cloud 100 (see FIG. 3B) (step S405).

Next, the setting unit 120 acquires the degree of intimacy with the viewer A10 from the name of the user U1 included in the user information of the user U1, the service ID, and the like (step S406). For example, the degree of intimacy may be set based on information such as whether or not the user U1 has played an online game together, whether or not the user U1 is registered as a friend, whether or not the viewer A10 has viewed a moving image content contributed by the user U1 in the past, and whether or not the viewer A10 and the user U1 have had a conversation on an SNS or the like. For example, in a case where the user U1 is set as a friend who plays an online game together, or in a case where the user U1 and the viewer A10 have had a conversation within one month on the SNS, the degree of intimacy may be set to 3 which is the highest level, and in a case where there is no direct conversation but the viewer A10 has viewed moving image contents uploaded by the contributor (user U1) three or more times in the past, the degree of intimacy may be set to 2, which is the second highest level, and in other cases, the degree of intimacy may be set to 1, which is the lowest level.

The setting unit 120 sets the position and the comment target defined on a rule basis or the like based on the degree of intimacy acquired in step S406. Specifically, in a case where the degree of intimacy between the viewer and the contributor is level 3 ("3" in step S406), the setting unit 120 determines that the viewer and the contributor are familiar with each other, sets the position of the virtual commentator to a team member, and sets the comment target to the contributor (player = user U1) (step S407). Furthermore, in a case where the degree of intimacy between the viewer and the contributor is level 2 ("2" in step S406), the setting unit 120 determines that the viewer and the contributor are not as familiar as team members, sets the position of the virtual commentator to a friend, and sets the comment target to the contributor (player = user U1) (step S408). On the other hand, in a case where the degree of intimacy between the viewer and the contributor is level 1 ("1" in step S406), the setting unit 120 sets the position of the virtual commentator to a friend and sets the comment target to a friend (step S408), thereby selecting the style of observers.

The degree of recognition for the moving image content may be acquired from the viewing history of the viewer A10, and in a case where the moving image content is a moving image content that is viewed for the first time, an explanation for a beginner, a basic rule, or the like may be preferentially provided as comments, and a more advanced content may be included when the viewer becomes accustomed to the moving image content. Furthermore, the comment may be changed according to a sensed emotional arousal level of the viewer A10. For example, in a case where the viewer A10 is relaxed, a comment or a comment voice having a calm content and tone may be generated, and in a case where the viewer A10 is excited, a comment or a comment voice having a more intensified content and tone may be generated. In addition, the degree of comfort and the degree of discomfort of the sensed emotion of the viewer A10 may be learned, and the result may be used to generate a comment or a comment voice.

As described above, it is possible to generate a comment according to the situation for each viewing. For example, in the first viewing of a video of a game in which the own team sustains a crushing defeat, a comment "So frustrating, I will practice more!" of the virtual commentator whose position is "player" for the comment target "friend" is generated, but in the second viewing after half a year, the number of subsequent wins, the number of trophies acquired, and the like are acquired from activity information of the player and improvement is detected, and a comment including reviewal such as "I owe my current self to the intense practice that followed the frustration" can be generated.

### 1.10 Example of generating conversation comments of two virtual commentators for real-time moving image distribution

Next, an example of generating conversation comments of two virtual commentators for real-time moving image distribution (hereinafter, also referred to as live distribution) will be described. In the description, it is assumed that the way of conversation between the two virtual commentators is, for example, that a commentator first comments on "what event has occurred" in response to the occurrence of the event, and then an expositor explains the event.

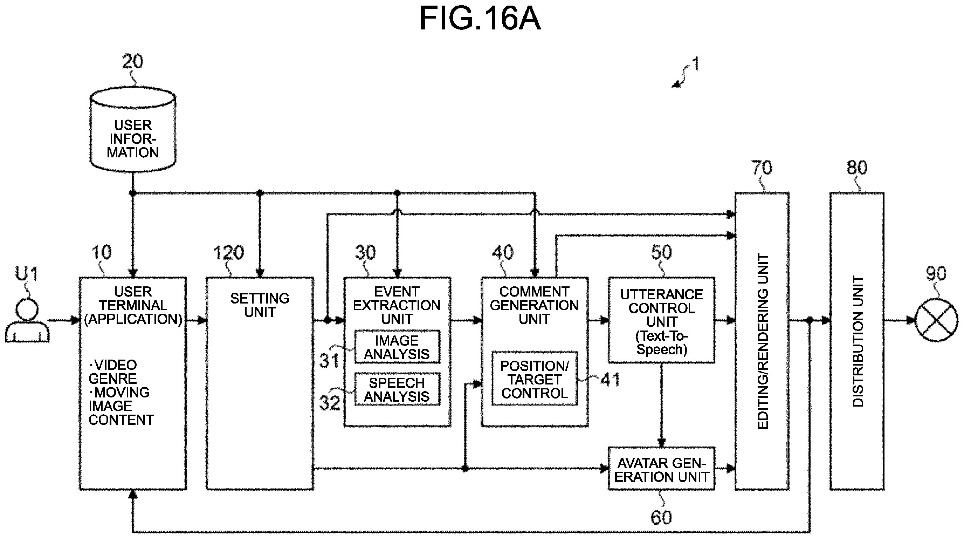

FIG. 16A is a block diagram illustrating a system configuration example in a case where conversation comments of two virtual commentators are generated for real-time moving image distribution. As illustrated in FIG. 16A, a system configuration example of the information processing system 1 in a case where conversation comments of two virtual commentators are generated for real-time moving image distribution includes, for example, a configuration in which the setting unit 120 in the system configuration example illustrated in FIG. 14 is added to the system configuration example illustrated in FIG. 4.

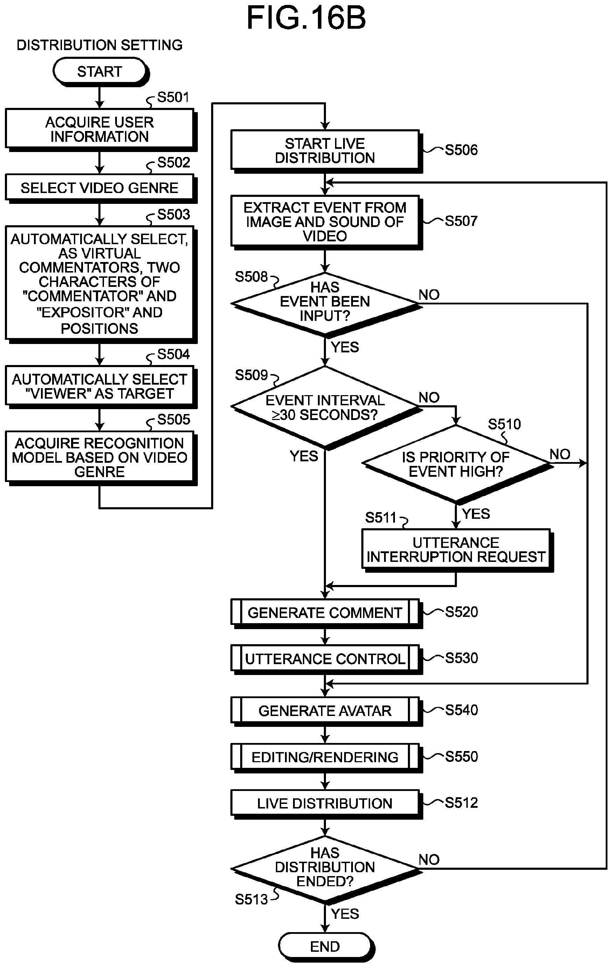

Next, an operation example in a case of generating conversation comments of two virtual commentators for real-time moving image distribution will be described. FIG. 16B is a flowchart illustrating an operation example in a case where conversation comments of two virtual commentators are generated for real-time moving image distribution.

As illustrated in FIG. 16B, in this operation, when the user U1 starts the application on the user terminal 10 to start preparation for live video distribution, the setting unit 120 is notified of a request for live distribution. The setting unit 120 that has received this request first acquires the user information regarding the user U1 from the user information retention unit 20 (step S501).

Meanwhile, a screen for selecting a video genre to be distributed live is displayed on the user terminal 10. When the user U1 selects the video genre based on this selection screen (step S502), a notification of the selected video genre is made from the user terminal 10 to the setting unit 120. The selection screen may have various modes such as an icon mode and a menu mode.

Next, the setting unit 120 automatically selects the characters and the positions of the two virtual commentators based on, for example, the video genre sent from the user terminal 10, the user information of the user U1 acquired from the user information retention unit 20, and the like (step S503). In this example, since it is assumed that "sports 1" in FIG. 5B is selected as the video genre, the setting unit 120 automatically selects two virtual commentators whose positions are "commentator" and "expositor".

Furthermore, the setting unit 120 automatically selects the comment target similarly based on the video genre, the user information, and the like (step S504). In this example in which "sports 1" is assumed as the video genre, for example, "viewer" is autonomously set as the comment target.

Next, as in step 5111 of FIG. 6A, the event extraction unit 30 acquires the recognition model based on the video genre of the moving image content (step S505).

When the preparation for the live distribution is completed in this way, next, the user U1 starts the live distribution of the moving image content by operating the user terminal 10 or an imaging device connected thereto (step S506). When the live distribution is started, the captured or taken-in video data (hereinafter, referred to as the moving image content) is sequentially output from the user terminal 10. At this time, the moving image content may be transmitted by a streaming method.

The moving image content transmitted from the user terminal 10 is input to the event extraction unit 30 directly or via the setting unit 120. The event extraction unit 30 extracts an event from the moving image content by inputting the moving image content to the recognition model acquired in step S505, similarly to step S112 in FIG. 6A (step S507). The event data generated in this manner is sequentially input to the comment generation unit 40.

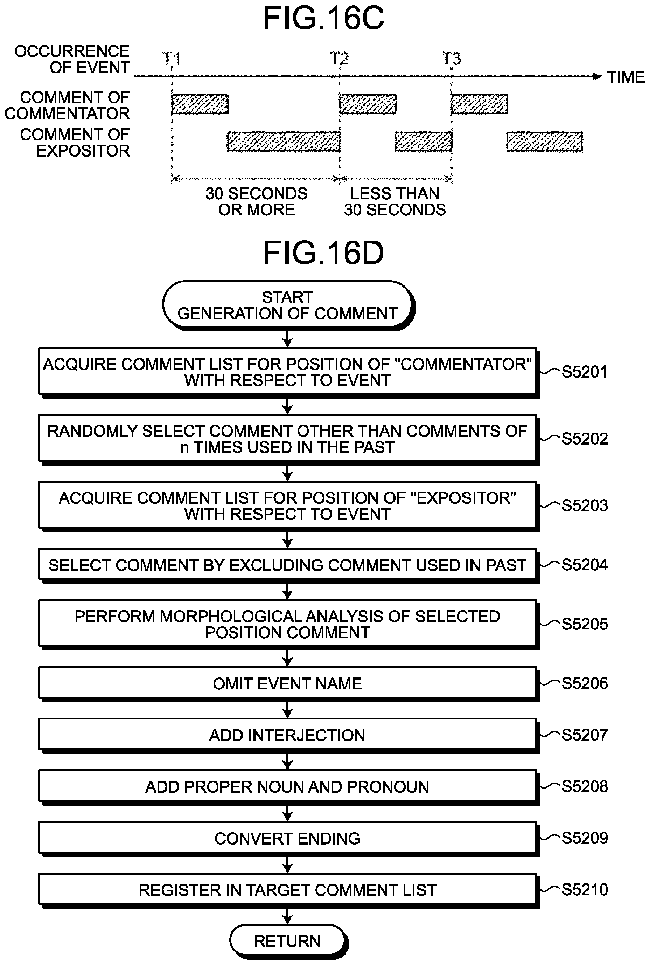

Meanwhile, the comment generation unit 40 periodically confirms whether or not the event data has been input (step S508). In a case where no event data has been input (NO in step S508), this operation proceeds to step S540. On the other hand, in a case where the event data has been input (YES in step S508), the comment generation unit 40 determines whether or not a predetermined time (for example, 30 seconds) or more has elapsed from a time when the immediately previous event data has been input (step S509). When the predetermined time or more has elapsed (YES in step S509), the comment generation unit 40 proceeds to step S520. In step S122 and the like of FIG. 7A, an example of the minimum event interval is 15 seconds, but in this example, since this is a conversation between two virtual commentators, an event interval is 30 seconds which is longer as illustrated in FIG. 16C.

On the other hand, in a case where the next event data has been input before the predetermined time has elapsed (NO in step S509), the comment generation unit 40 determines whether or not the event data is event data of an event with a high priority (step S510), and in a case where the event data is event data of an event with a high priority (YES in step S510), in order to interrupt the utterance of the previous event, the comment generation unit 40 notifies the editing/rendering unit 70 of a request (utterance interruption/stop request) to interrupt or stop the utterance currently being executed or the utterance to be executed by one of the virtual commentators (step S511), and proceeds to step S520. In addition, in a case where the event data is not event data of an event having a high priority (NO in step S510), the comment generation unit 40 discards the input event data, and this operation proceeds to step S540. For example, in a case where the moving image content is a soccer game playing video, the priority of an event such as "passed the ball" is low, but the priority of an event such as "goal" is high. The priority of each event may be set in the parameter in the event management table illustrated in FIG. 6C, for example.

In step S520, the comment generation unit 40 generates the position comment to be uttered by one of the virtual commentators based on the input event data.

In step S530, the utterance control unit 50 converts text data of the position comment generated by the comment generation unit 40 into the sound data.

In step S540, the avatar generation unit 60 generates the avatar animation in which the avatar of the virtual commentator moves according to the sound data generated by the utterance control unit 50. The operation example of the avatar generation processing may be similar to the operation example described above with reference to FIG. 9B.

In step S550, the editing/rendering unit 70 generates a commented moving image content from the selected moving image content, the sound data, and the avatar animation.

When the commented moving image content is generated in this manner, the generated commented moving image content is distributed live from the distribution unit 80 via the predetermined network 90 (step S512).

Thereafter, for example, a control unit (not illustrated) in the cloud 100 determines whether or not to end distribution (step S513), and in a case where the control unit determines not to end the distribution (NO in step S513), the operation returns to step S507. On the other hand, in a case where the control unit determines to end the distribution (YES in step S513), this operation ends.

### 1.10.1 Example of comment generation processing

Here, the comment generation processing described in step S520 of FIG. 16B will be described in more detail. FIG. 16D is a flowchart illustrating an example of an operation flow of the comment generation processing.

As illustrated in FIG. 16D, the comment generation unit 40 first acquires a comment list for the position of "commentator" from the position comment list illustrated in FIG. 7B with respect to the comment data sequentially input from the event extraction unit 30 (step S5201) .

Next, the comment generation unit 40 refers to the used comment history for the comment list acquired in step S5201, and selects one of the position comments obtained by excluding the past comments of n times from the comment list acquired in step S5201 (step S5202). In step S5202, similarly to step S125 of FIG. 7A or FIG. 11A, for example, the position comment may be randomly selected using a pseudo random number or the like, or the position comment may be selected according to the order of the comment list from which the past comments of n times are excluded. Alternatively, one comment in the comment list obtained by excluding the position comment used during the current live distribution may be selected.

Similarly, the comment generation unit 40 first acquires the comment list for the position of "commentator" with respect to the comment data sequentially input from the event extraction unit 30 (step S5203), and selects one of the position comments obtained by excluding the past comments of n times based on the comment history used for the acquired comment list (step S5204).

Next, as in steps S126 to S131 of FIG. 7A, the comment generation unit 40 analyzes the position comments selected in steps S5202 and S5204 by morphological analysis or the like (step S5206), omits the event name included in the position comment (step S5207), adds an exclamation to the position comment (step S5208), adds a proper noun, a pronoun, or the like to the position comment (step S5209), converts the ending to be suitable for a call to the target (step S5210), then adds the event ID, the parameter, and the time code to the position comment, registers the resulting position comment in the target comment list (step S5211), and returns to the operation illustrated in FIG. 16B.

### 1.10.2 Example of utterance control processing

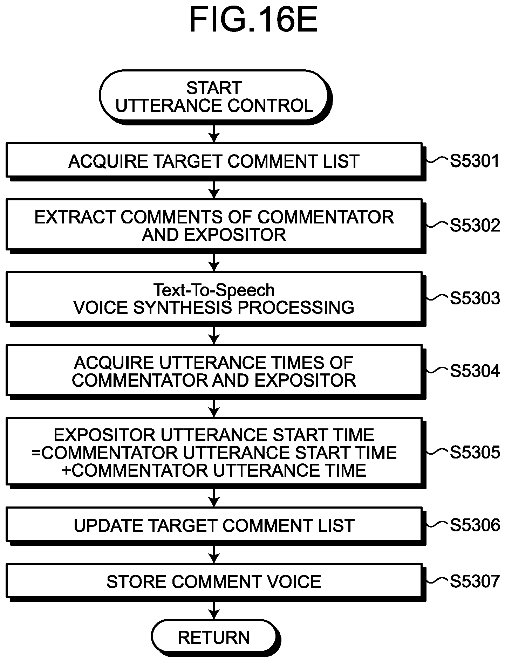

Furthermore, the utterance control processing described in step S540 of FIG. 16B will be described in more detail. FIG. 16E is a flowchart illustrating an example of an operation flow of the utterance control processing.

As illustrated in FIG. 16E, when the target comment list is acquired from the comment generation unit 40 (step S5301), the utterance control unit 50 separately extracts the position comments of the positions "commentator" and "expositor" from the acquired target comment list (step S5302).

Next, the utterance control unit 50 converts each position comment into the sound data (comment voice) by performing voice synthesis processing using TTS on the text data of each position comment of "commentator" and "expositor" (step S5303).

Next, the utterance control unit 50 acquires an utterance time of each of the comment voice of "commentator" and the comment voice of "expositor" (step S5304) .

Next, the utterance control unit 50 sets an utterance start time (time code) of the expositor to a time point after the lapse of the utterance time of the commentator from an utterance start time (time code) of the commentator (step S5305), and updates the target comment list at the updated utterance start time of the expositor (step S5306), so that the utterance of the virtual commentator of the expositor is started after the end of the utterance of the virtual commentator of the commentator, as illustrated in FIG. 16C.

Thereafter, the utterance control unit 50 stores voice files of the comment voice of "commentator" and the comment voice of "expositor" (step S5307), and returns to the operation illustrated in FIG. 16B.

### 1.10.3 Example of editing/rendering processing

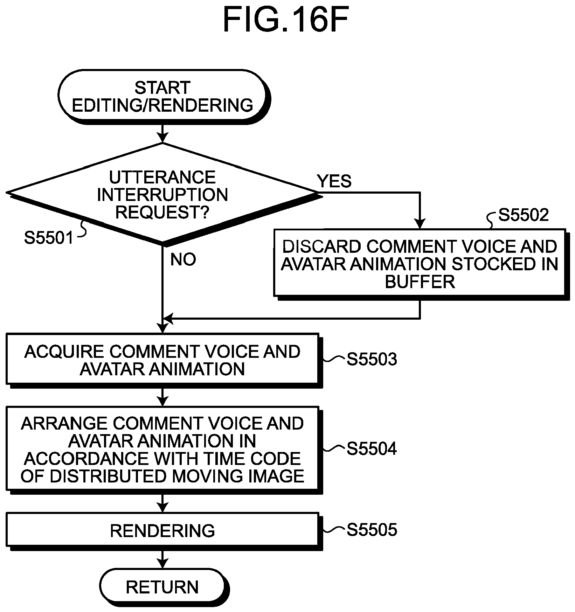

Furthermore, the editing/rendering processing illustrated in step S550 of FIG. 16B will be described in more detail. FIG. 16F is a flowchart illustrating an example of an operation flow of the editing/rendering processing.

As illustrated in FIG. 16F, the editing/rendering unit 70 first determines whether or not an utterance interruption request has been transmitted from the comment generation unit 40 (step S5501), and proceeds to step S5503 in a case where no utterance interruption request has been transmitted (NO in step S5501). On the other hand, in a case where the utterance interruption request has been transmitted (YES in step S5501), the comment voice and the avatar animation stocked in a buffer for editing and rendering are discarded (step S5502), and the processing proceeds to step S5503. In a case where the commented moving image content before distribution is stocked in the distribution unit 80 or the editing/rendering unit 70, the commented moving image content may be discarded.

In step S5503, the editing/rendering unit 70 acquires the comment voice from the utterance control unit 50 and acquires the avatar animation from the avatar generation unit 60. Subsequently, similarly to steps S1602 and S1603 of FIG. 9C, the editing/rendering unit 70 arranges the comment voice and the avatar animation on the moving image content in accordance with the time code (step S5504), and generates the commented moving image content by rendering the moving image content on which the comment voice and the avatar animation are arranged (step S5505). Thereafter, this operation returns to FIG. 16B.

### 1.11 Example of generating comment according to feedback from viewer during real-time moving image distribution

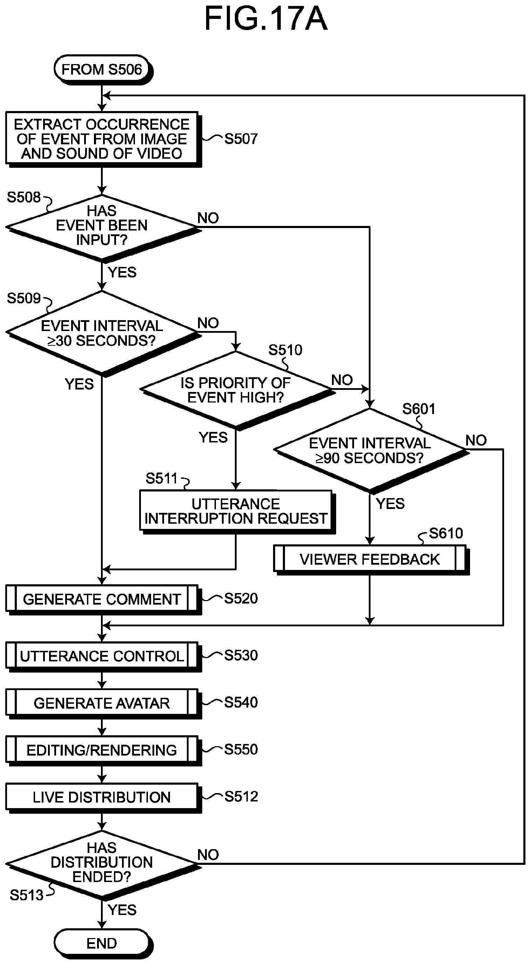

Next, an example of generating a comment according to a feedback from the viewer during real-time moving image distribution will be described. FIG. 17A is a flowchart illustrating an operation example in a case where a comment is generated according to a feedback from a viewer during real-time moving image distribution. In the description, based on the operation example described above with reference to FIG. 16B, in a case where no event has been detected for a predetermined time (90 seconds in this example) or more in event recognition during live distribution, a comment generated based on a feedback from a viewer is incorporated in order to give a pause.

As illustrated in FIG. 17A, in this operation, in a case where it is determined in step S508 that no event data has been input (NO in step S508) in the same operation as the operation illustrated in FIG. 16B, or in a case where it is determined in step S510 that the event data is not event data of an event with a high priority (NO in step S510), step S601 is executed.

In step S601, the comment generation unit 40 determines whether or not a predetermined time (for example, 90 seconds) or more has elapsed from a time when the immediately previous event data has been input. In a case where the predetermined time or more has not elapsed (NO in step S601), the comment generation unit 40 proceeds directly to step S530. On the other hand, in a case where the predetermined time or more has elapsed (YES in step S601), the comment generation unit 40 performs viewer feedback (step S610), and then proceeds to step S530.

### 1.11.1 Example of viewer feedback

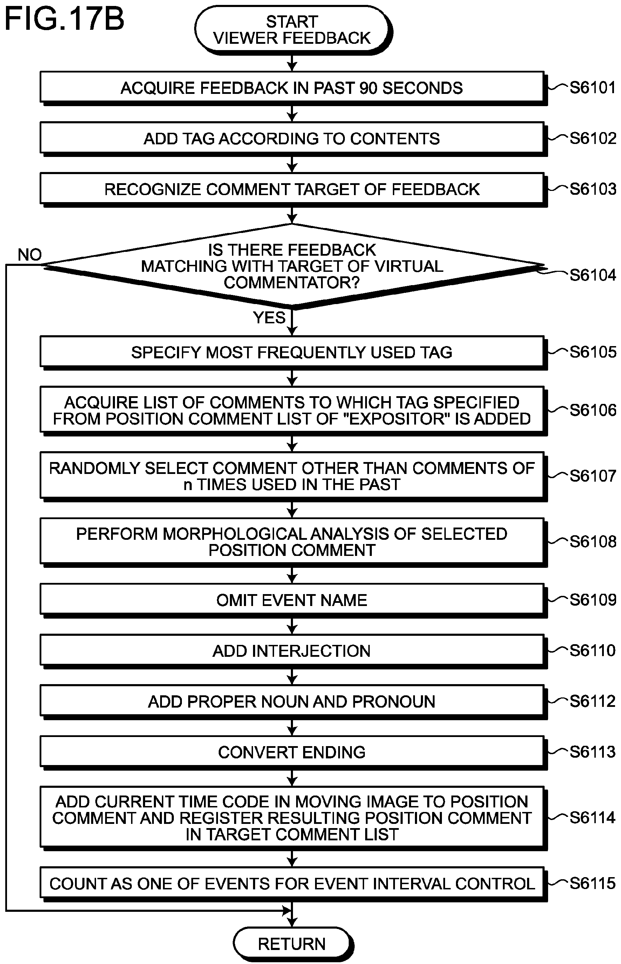

Here, in this example, a function in which each viewer (which may include a contributor (a player himself/herself)) can send a comment in a chat or the like of a distribution service as a feedback from a viewer is assumed. FIG. 17B is a flowchart illustrating an example of an operation flow of viewer feedback processing.

As illustrated in FIG. 17B, the comment generation unit 40 first acquires a feedback such as a chat sent from each viewer within a past predetermined time (90 seconds in this example) (step S6101). Subsequently, the comment generation unit 40 recognizes a keyword, a content, or the like of the acquired feedback by using a recognizer using machine learning or the like, adds a tag such as "cheer", "disappointment", or "jeer" (step S6102) to the acquired feedback, and recognizes a feedback target based on the recognition result (step S6103). For example, the comment generation unit 40 recognizes that a tag to be added is "cheer" and the target (feedback target) is the player if the feedback from the viewer is "Don't worry, do your best!", recognizes that the tag to be added is "delight" and the target is the viewer himself/herself if the feedback from the viewer is "Yes! I'm happy!", and recognizes that the tag to be added is "disappointment" and the target is another viewer if the feedback from the viewer is "Won't you stop watching anymore?".

Next, the comment generation unit 40 determines whether or not there is a feedback target matching the target (a person himself/herself, a team member, a friend, or the like) set as the comment target (step S6104), and in a case where there is no matching target (NO in step S6104), the comment generation unit 40 returns to the operation illustrated in FIG. 17A. On the other hand, in a case where there is a matching target (YES in step S6104), the comment generation unit 40 extracts a feedback whose feedback target matches the comment target from the acquired feedback, and specifies the most frequently used tag among the tags added to the extracted feedback (step S6105) .

Next, the comment generation unit 40 acquires a list of comments in which the position is "expositor" from the position comment list illustrated in FIG. 7B, for example, and extracts a comment to which the tag specified in step S6105 is added from the acquired comment list to create a list (comment list) (step S6106). By narrowing down the comments of the virtual commentator to the comments of the same tag as the feedback from the viewer, it is possible to cause the virtual commentator to utter the comment empathizing with the viewer.

Next, the comment generation unit 40 generates the position comment to be actually uttered by the virtual commentator by performing the operation similar to steps S5204 to S5209 of FIG. 16D (steps S6107 to S6113), and then adds the current time code in the moving image being distributed live to the position comment and registers the resulting position comment in the target comment list (step S6114) .

Next, in order to control the event interval in steps S510 and S601, the comment generation unit 40 counts the position comment registered in the target comment list in step S6114 as one of the events (step S6115), and returns to the operation illustrated in FIG. 17A.

### 1.12 Example in which virtual commentator increases or decreases during real-time moving image viewing

FIGS. 16A to 16F illustrate an example of generating conversation comments of two virtual commentators for live distribution. On the other hand, in this example, an example in which the number of virtual commentators increases or decreases during viewing of live distribution (hereinafter, referred to as live viewing) will be described. Here, the increase or decrease in number of virtual commentators means that an environment in which players and viewers change in real time, such as an online battle game, is assumed, and not only the virtual commentators set for themselves but also the virtual commentators set for other viewers are displayed on the user terminal of each viewer, so that the number of virtual commentators increases or decreases or the virtual commentators are replaced according to the increase or decrease or change of other viewers. With such a configuration, it is possible to produce a feeling that the battle is exciting, and it is possible to generate an interaction between virtual commentators. Furthermore, in a case where not only the virtual commentator of the viewer but also the virtual commentator of the player is displayed, the number of virtual commentators may increase or decrease or the virtual commentator may be changed according to the increase or decrease or change of the player.

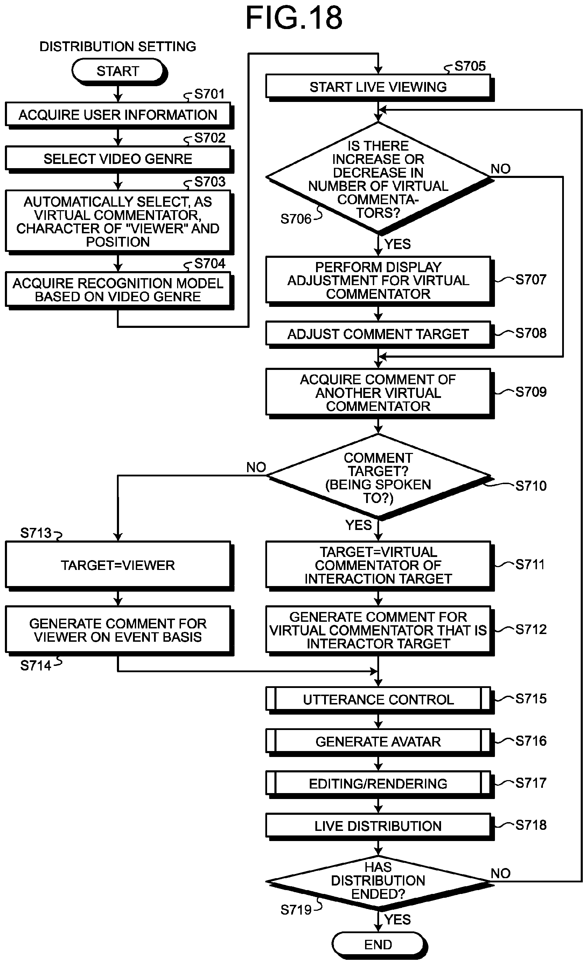

FIG. 18 is a flowchart illustrating an example of an operation flow in a case where the number of virtual commentators increases or decreases during live distribution. In a case where the virtual commentators are replaced, it is possible to execute processing as a case where a decrease and an increase in virtual commentators occur at the same time, and thus, a detailed description thereof will be omitted here.

As illustrated in FIG. 18, in this operation, first, when the viewer A10 starts the application on the user terminal 110 and starts live viewing of the video, a request for live viewing is transmitted to the setting unit 120. The setting unit 120 that has received this request first acquires the user information regarding the viewer A10 from the user information retention unit 20 (step S701).

Meanwhile, a screen for selecting a video genre to be viewed live is displayed on the user terminal 110. When the viewer A10 selects the video genre based on this selection screen (step S702), a notification of the selected video genre is made from the user terminal 110 to the setting unit 120. The selection screen may have various modes such as an icon mode and a menu mode.

Next, the setting unit 120 automatically selects the character of the virtual commentator based on, for example, the video genre sent from the user terminal 110, the user information of the viewer A10 acquired from the user information retention unit 20, and the like, and sets "viewer" as the position (step S703).

Next, as in step 5111 of FIG. 6A, the event extraction unit 30 acquires the recognition model based on the video genre of the moving image content (step S704).

When the preparation for the live viewing is completed in this manner, next, the distribution unit 80 starts distributing a real-time video to the user terminal 110 (step S705). When the live viewing is started, the real-time video (moving image content) is sequentially output from the distribution unit 80 to the user terminal 110. At this time, the moving image content may be transmitted by a streaming method.

The number of viewers participating in the live distribution, the user information of the player and the viewer, and the like are managed by the setting unit 120, for example. The setting unit 120 manages the number of viewers who are currently viewing the live distribution, determines whether or not the number of viewers increases or decreases (step S706), and in a case where there is no increase or decrease in number of viewers (NO in step S706), the moving image proceeds to step S709.

In a case where there is an increase or decrease in number of viewers (YES in step S706), the setting unit 120 performs display adjustment for the virtual commentator (step S707). Specifically, in a case where a new viewer is added, the setting unit 120 adjusts the setting in such a way that the virtual commentator of the newly added viewer is additionally displayed in the real-time video (moving image content) distributed to the viewer A10. Furthermore, in a case where a viewer leaves the live distribution, the setting unit 120 adjusts the setting in such a way that the virtual commentator of the viewer who has left is not displayed in the real-time video for the viewer A10. At this time, a specific animation may be displayed, for example, the virtual commentator of the viewer who has left enters or exits from a door that appears on the screen. For example, a virtual commentator supporting an opponent team B appears in a state in which the viewer A10 is cheering for a team A, which leads to a spirited competition of cheering, thereby intensifying the battle. Furthermore, when a friend of the viewer A10 newly joins the live distribution, a virtual commentator of the friend appears, which can intensify the cheering or the battle.

Next, the setting unit 120 adjusts the comment target of the virtual commentator related to the viewer A10 based on the increase or decrease in number of virtual commentators (step S708). For example, in a case where the number of virtual commentators increases, the increased virtual commentators are added as the comment targets, and in a case where the number of virtual commentators decreases, the reduced virtual commentators are deleted from the comment targets. Then, the setting unit 120 sequentially inputs the adjusted virtual commentator and the comment target thereof to the event extraction unit 30 and the avatar generation unit 60.

Next, the comment generation unit 40 acquires the position comment generated for the virtual commentator of another viewer (hereinafter, referred to as a virtual commentator B for convenience of description) (step S709), and determines whether or not the target (listener) of the position comment is the virtual commentator of the viewer A10 (hereinafter, referred to as the virtual commentator A for convenience of description) (step S710).

In a case where the virtual commentator A is the target (YES in step S710), the comment generation unit 40 generates the position comment for the virtual commentator B (step S712) by setting the target (listener) of the comment to be uttered by the virtual commentator A to the virtual commentator B who has spoken to (step S711), and proceeds to step S715. On the other hand, in a case where the virtual commentator A is not the target (NO in step S710), the comment generation unit 40 sets the target of the comment to the viewer (step S713), generates the position comment for the viewer on an event basis (step S714), and proceeds to step S715.

As in steps S530 to S550 and S512 of FIG. 16B, in steps S715 to S718, utterance control processing (S715), avatar generation processing (S716), and editing/rendering processing (S717) are executed, and a commented moving image content generated thereby is distributed live to the viewer A10 and other viewers (step S718).

Thereafter, for example, a control unit (not illustrated) in the cloud 100 determines whether or not to end distribution (step S719), and in a case where the control unit determines not to end the distribution (NO in step S719), the operation returns to step S706. On the other hand, in a case where the control unit determines to end the distribution (YES in step S719), this operation ends.

In this example, for example, in a case where no event has occurred for a predetermined period (for example, 90 seconds), the virtual commentator A may actively speak to another commentator, for example, in a manner in which the virtual commentator A generates and inserts a comment for speaking to another virtual commentator B. Furthermore, regarding utterance timings of a plurality of virtual commentators, in the example illustrated in FIG. 16B, the rule has been described in which the virtual commentator as the commentator makes utterance and then the virtual commentator as the expositor makes utterance. However, in this example, in order to encourage excitement, simultaneous utterances of a plurality of virtual commentators may be permitted. At this time, in order to make it easy for the viewer to hear the utterance content of each virtual commentator, measures may be taken such as relatively lowering the voice volume of a virtual commentator other than the virtual commentator A or separating the localization of the sound.

### 1.13 Example of adjusting display position according to position of virtual commentator

Furthermore, the display position of the virtual commentator on the user terminal 10/110 may be adjusted according to the position. In other words, a virtual position may be set for the virtual commentator according to the position.

For example, when the moving image content is a two-dimensional image, the virtual position may be within a region of the image or may be outside the region. In addition, in a case of a three-dimensional video, the virtual position may be in a 3D space or in a region of a two-dimensional video superimposed on the three-dimensional video. Further, the virtual commentator does not have to be visually displayed. In this case, the viewer (including the user) may feel the presence of the virtual commentator by sound source localization or the like at the time of rendering the voice of the virtual commentator.

For example, in a case where the position of the virtual commentator is "friend watching together" or the like, it is assumed that the virtual position of the virtual commentator is next to the viewer. In this case, the virtual position can be set to either the right or left side of the viewer, a distance from the moving image content (specifically, the user terminal 10/110) is equal to that of the viewer, the orientation is basically toward the content, and the position and orientation toward the viewer can be set when speaking to the viewer.

Furthermore, in a case where the position of the virtual commentator is the person himself/herself, the virtual position to be positioned next to the viewer in order to give a feeling of experiencing together with the viewer, the virtual position facing the viewer from the side of the content as a presenter, or the like can be considered.

In a case where such a virtual position is determined, it is possible to make the viewer feel the virtual position including the position and orientation, a time-series change thereof, and the like by 2D/3D drawing of the virtual commentator or localizing a sound source of the virtual commentator in a three-dimensional space. For example, it is possible to express a sound difference between speaking in a direction toward the viewer and speaking in a direction 90 degrees different from the direction toward the viewer, a sound difference between speaking from a distance and speaking near the ear, a state in which the virtual commentator approaches/moves away, and the like.

Such adjustment of the display position (virtual position) according to the position of the virtual commentator can be implemented, for example, by the avatar generation unit 60 adjusting the display position of the generated avatar animation in the moving image content according to the position of the virtual commentator. Furthermore, the adjustment of the orientation of the virtual commentator according to the position of the virtual commentator can be implemented, for example, by the avatar generation unit 60 adjusting the orientation of the virtual commentator when generating the avatar animation according to the position of the virtual commentator.

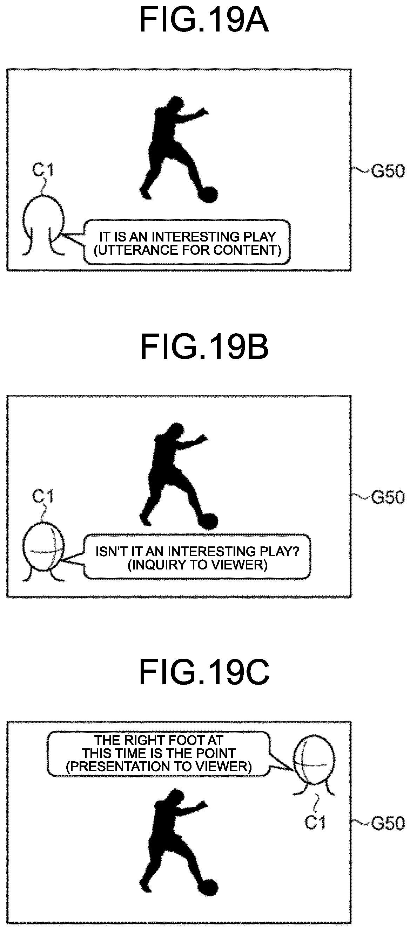

FIGS. 19A to 19C are diagrams for describing an example of a case where the display position is adjusted according to the position of the virtual commentator. FIG. 19A illustrates an example of the virtual position in a case where the position of the virtual commentator is "friend watching together", and utterance is made for the moving image content. FIG. 19B illustrates a case where the position of the virtual commentator is "friend watching together", and utterance is made for the viewers. FIG. 19C illustrates a case where the position of the virtual commentator is "expositor" and utterance is made for the viewers.

As illustrated in FIG. 19A, for example, in a case where the position of the virtual commentator is "friend watching together", and utterance is made for the moving image content, the virtual commentator C1 may be arranged on a side (front side) close to the viewer in the moving image content G50, and the orientation of the virtual commentator C1 may be toward the event (a character operated by the user U1 in this example) in the moving image content G50.

Furthermore, as illustrated in FIG. 19B, for example, in a case where the position of the virtual commentator is "friend watching together", and utterance is made for the viewers, the virtual commentator C1 may be arranged on a side (front side) close to the viewer in the moving image content G50, and the orientation of the virtual commentator C1 may be toward the viewers.

As illustrated in FIG. 19C, for example, in a case where the position of the virtual commentator is "expositor" and utterance is made for the viewers, the virtual commentator C1 may be arranged on the side far from the viewer (on the back side) in the moving image content G50, and the orientation of the virtual commentator C1 may be toward the event or the viewers.

As described above, by controlling the display position and orientation of the virtual commentator according to the position of the virtual commentator and the comment target, it is possible to improve the realistic feeling of the viewer in the content experience.

### 1.14 Example of comment rule in case where there are plurality of virtual commentators

Furthermore, it is assumed that the comment content of the virtual commentator indicates a specific point in the moving image frame, such as "the movement of this player is great". On the other hand, since a region that can be gazed by a human is limited as compared respect to a moving image frame, there is a possibility that the ease of understanding for the viewer is reduced when the line-of-sight of the viewer largely moves. For such a problem, for example, it is conceivable to set a rule that, in a case where there are a plurality of virtual commentators, if a certain virtual commentator makes a comment on a specific point in a moving image frame, no comment is made on a point that does not fall within the central viewing angle by another virtual commentator within a certain time.

### 1.15 Example of commenting using line-of-sight information

Furthermore, by detecting a gaze point on the screen from line-of-sight information of the contributor and causing the virtual commentator to comment on the portion, attention of the viewer may be guided in a direction desired by the contributor, or conversely, by detecting a gaze point on the screen from line-of-sight information of the viewer and causing the virtual commentator to make a comment on the portion, or the like.

### 1.16 Example of display position of caption

Furthermore, a caption of a voice comment uttered by the virtual commentator may be superimposed and displayed on the moving image content. At this time, for example, by adjusting the display position of the caption based on the line-of-sight information of the contributor or the viewer, it is possible to reduce the line-of-sight movement of the viewer and improve the ease of understanding. Specifically, by displaying the caption in the vicinity of a region in the moving image content gazed by the viewer or the viewer, the comment and the region targeted by the comment can be visually linked. Therefore, the light-of-sight movement of the viewer can be reduced, and the ease of understanding can be improved.

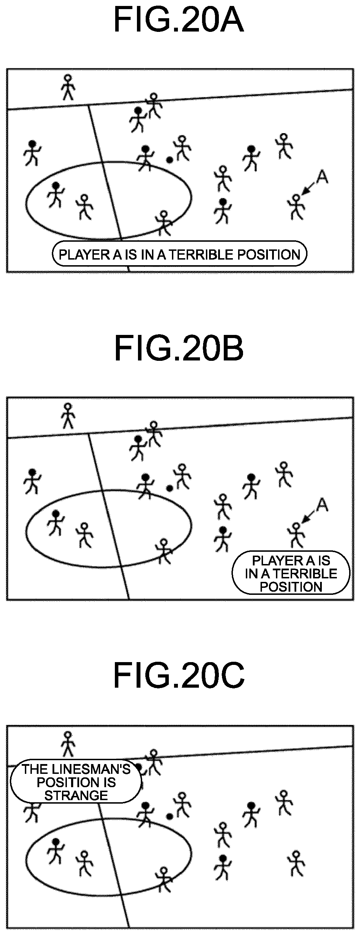

FIG. 20A illustrates an example of a case where the caption of the voice comment is arranged at a basic position (for example, the lower center of the screen), FIG. 20B illustrates an example of a case where the position of the caption of the voice comment is adjusted based on the line-of-sight information of the contributor, and FIG. 20C illustrates an example of a case where the position comment is generated based on the line-of-sight information of the viewer, and the display position of the caption of the voice comment is adjusted.

As illustrated in FIG. 20A, in a case where the caption is displayed at a predetermined position without considering where the contributor or the viewer is viewing, it is not possible to easily specify to which player on the screen the virtual commentator has uttered a comment, and thus, ease of understanding is reduced.

On the other hand, as illustrated in FIG. 20B, for example, in a case where the display position of the caption is adjusted based on the line-of-sight information of the contributor (or the viewer), it is possible to display the caption in the vicinity of the target to which the virtual commentator utters the comment, and thus, it is possible to enable the viewer to easily recognize for which portion (the player in the example of FIG. 20B) on the screen the virtual commentator has uttered the comment.

Furthermore, as illustrated in FIG. 20C, by generating the position comment based on where the viewer is viewing on the screen (that is, on the moving image content), it is possible to cause the virtual commentator to make utterance for the event being gazed by the viewer in a timely manner. Furthermore, by adjusting the display position of the caption of the voice comment based on the line-of-sight information of the viewer, it is possible to enable the viewer to easily recognize for which portion (the player in the example of FIG. 20C) on the screen the virtual commentator has uttered the comment.

In order to acquire the line-of-sight information of the contributor or the viewer, for example, a line-of-sight detection sensor or a camera provided in the user terminal 10/110 may be used. That is, the user terminal 10/110 can also function as the acquisition unit that acquires the line-of-sight information of the contributor or the viewer.

### 1.17 Example of generating comment for each position of virtual commentator by applying machine learning

Next, an example of a case where machine learning is applied to generate the comment for each position of the virtual commentator will be described. In recent years, moving image distribution has become common, and the number of distributions has rapidly increased particularly for game videos. In main distribution platforms, a comment of a game player, a comment of a moving image viewer, a comment of a commentator/expositor at an e-SPORTS (registered trademark) match or the like are exchanged in real time during moving image distribution, and it is expected that the main distribution platforms will be further developed in the future including categories other than games as means for interactively enjoying moving images.

Such diversification of comment senders corresponds to the position of the virtual commentator. For example, in a case of a game commentary, the comment of the position "the person himself/herself" in FIG. 1 is a comment of the player himself/herself, the comment of the position "team member" is a comment of another player playing together with the player, and the comment of the position "viewer (friend)" can be considered as a comment of a viewer who is not directly involved in the game play, and each of the comments can be independently acquired based on a difference in microphone and comment ID. In addition, the comments of various positions such as "enemy (opponent)", "commentator", "expositor", and "host" can be similarly acquired independently.

That is, the number of distributed moving images to which comments from the positions of various virtual commentators are added is rapidly increasing, and as a result, a large amount of comments from various positions are independently acquired for each of the positions. As a result, it has become possible to create a large-scale comment data set (for example, the position comment list in FIG. 7B) for each position of the virtual commentator.

The large-scale comment data set is inferior in the comment amount to a general-purpose language model based on another ultra-large-scale data set, but it is possible to construct a language model for each position using both the general-purpose language model and the large-scale position data set by performing optimization such as fine tuning and N-Shot learning on the general-purpose language model trained using the data set for each position.

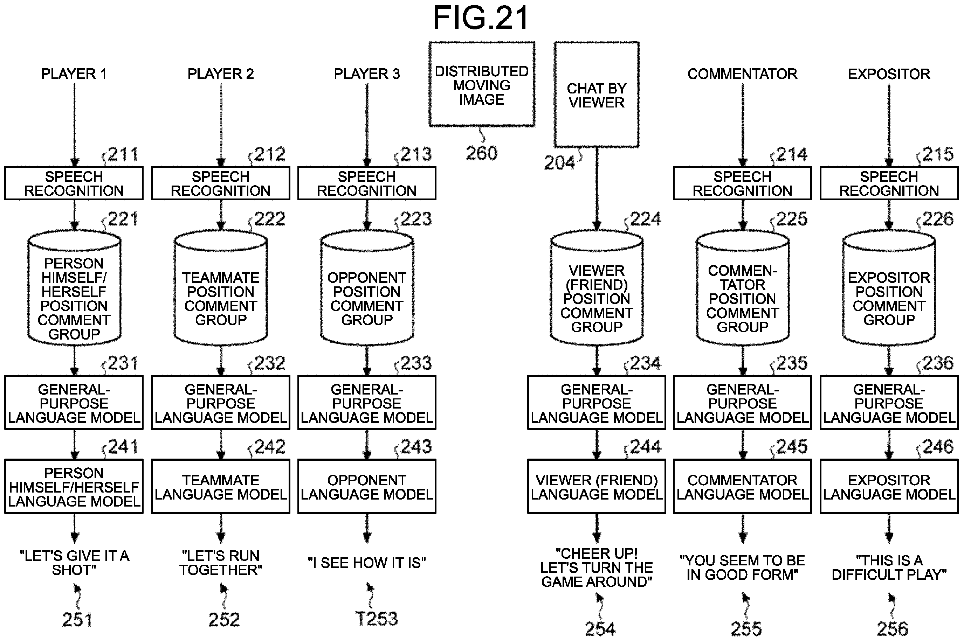

FIG. 21 is a block diagram illustrating a system configuration example in a case where a comment is generated for each position of the virtual commentator by applying machine learning. As illustrated in FIG. 21, contents uttered by each of players 1 to 3, who are game participants, a commentator, and an expositor are converted into text data by voice recognitions 211 to 213, 215, and 216, and are stored in position comment groups 221 to 226 of the respective positions. In a chat 204 by a viewer, the input text data is stored in a viewer (friend) position comment group 224.

General-purpose language models 231 to 236 prepared for the players 1 to 3, the chat 204 by the viewer, the commentator, and the expositor are trained using, as training data, comment data sets registered in the position comment groups 221 to 226 of the respective positions. As a result, language models (position comment lists) 241 to 246 of the respective positions are created.

The comment generation unit 40 in the information processing system 1 according to the present embodiment can generate appropriate position comments according to various positions of the virtual commentator by using the language models (position comment lists) 241 to 246 of the respective positions.

Although an example of arranging the comment voice and the avatar animation in the moving image content has been mainly described so far, the processing described based on each flowchart may be executed for generation and addition of a text (caption) comment, or may be executed for both the voice comment and the text comment. Furthermore, only the text comment and/or the voice comment may be added without adding the avatar animation to the moving image content.

### 2. System configuration example

At least some of the setting unit 120, the event extraction unit 30, the comment generation unit 40, the utterance control unit 50, the avatar generation unit 60, the editing/rendering unit 70, and the distribution unit 80 according to the above-described embodiments may be implemented in the user terminal 10/110, and the rest may be implemented in one or more information processing devices such as a cloud server on a network, or all may be implemented in a cloud server on a network. For example, the setting unit 120 may be implemented by the user terminal 10/110, and the event extraction unit 30, the comment generation unit 40, the utterance control unit 50, the avatar generation unit 60, the editing/rendering unit 70, and the distribution unit 80 may be implemented in a cloud server or the like on a network.

### 3. Hardware configuration

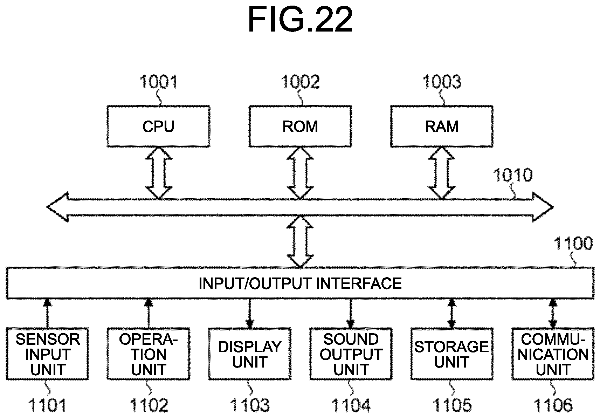

One or more information processing devices that execute at least one of the user terminal 10/110, the setting unit 120, the event extraction unit 30, the comment generation unit 40, the utterance control unit 50, the avatar generation unit 60, the editing/rendering unit 70, or the distribution unit 80 according to the above-described embodiment can be implemented by a computer 1000 having a configuration as illustrated in FIG. 22, for example. FIG. 22 is a hardware configuration diagram illustrating an example of the computer 1000 that implements the user terminal 10/110 and the functions of the information processing device.

As illustrated in FIG. 22, the computer 1000 includes a central processing unit (CPU) 1001, a read only memory (ROM) 1002, a random access memory (RAM) 1003, a sensor input unit 1101, an operation unit 1102, a display unit 1103, a sound output unit 1104, a storage unit 1105, and a communication unit 1106. The CPU 1001, the ROM 1002, and the RAM 1003 are connected to one another via an internal bus 1010. The sensor input unit 1101, the operation unit 1102, the display unit 1103, the sound output unit 1104, the storage unit 1105, and the communication unit 1106 are connected to the internal bus 1010 via an input/output interface 1100.

The CPU 1001 operates based on a program stored in the ROM 1002 or the storage unit 1105, and controls each unit. For example, the CPU 1001 loads a program stored in the ROM 1002 or the storage unit 1105 into the RAM 1003, and executes processing corresponding to various programs.

The ROM 1002 stores a booting program such as a basic input output system (BIOS) executed by the CPU 1001 when the computer 1000 is started, a program depending on hardware of the computer 1000, and the like.

The storage unit 1105 is a computer-readable recording medium that non-transitorily records a program executed by the CPU 1001, data used by the program, and the like. Specifically, the storage unit 1105 is a recording medium that records a program for executing each operation according to the present disclosure.

The communication unit 1106 is an interface for the computer 1000 to be connected to an external network (for example, the Internet). For example, the CPU 1001 receives data from another device or transmits data generated by the CPU 1001 to another device via the communication unit 1106.

The sensor input unit 1101 includes, for example, a line-of-sight detection sensor or a camera that detects a line of sight of a contributor, a viewer, or the like, and generates line-of-sight information of the contributor, the viewer, or the like based on the acquired sensor information. Furthermore, for example, in a case where the user terminal 10/110 is a game console or the like, an inertial measurement unit (IMU), a microphone, a camera, or the like included in the game console or a controller thereof may be included.

The operation unit 1102 is an input device such as a keyboard, a mouse, a touch pad, a touch panel, or a controller for a contributor or a viewer to input operation information.

The display unit 1103 is a display that displays a game screen or a moving image content. For example, various selection screens as illustrated in FIGS. 2A to 2D can be displayed on the display unit 1103.

The sound output unit 1104 includes, for example, a speaker or the like, and outputs sound of a game or a moving image content, a voice comment uttered by the virtual commentator in the moving image content, or the like.

For example, in a case where the computer 1000 functions as any one or more of the user terminal 10/110, the setting unit 120, the event extraction unit 30, the comment generation unit 40, the utterance control unit 50, the avatar generation unit 60, the editing/rendering unit 70, and the distribution unit 80 according to the above-described embodiment, the CPU 1001 of the computer 1000 implements the function of each corresponding unit by executing a program loaded into the RAM 1003. Furthermore, the storage unit 1105 stores programs and the like according to the present disclosure. The CPU 1001 reads the programs from the storage unit 1105 and executes the programs, but as another example, these programs may be acquired from another device on the network via the communication unit 1106.

Although the embodiments of the present disclosure have been described above, the technical scope of the present disclosure is not limited to the above-described embodiments as it is, and various modifications can be made without departing from the gist of the present disclosure. In addition, components of different embodiments and modified examples may be appropriately combined.

Furthermore, the effects of each embodiment described in the present specification are merely examples and are not limitative, and other effects may be provided.

Furthermore, each of the above-described embodiments may be used alone, or may be used in combination with another embodiment.

Note that the present technology can also have the following configurations.
(1) An information processing device including:
   an acquisition unit that acquires information regarding a relationship between a contributor of a content and a viewer of the content; and
   a comment generation unit that generates a comment to be uttered by a virtual commentator based on the information regarding the relationship.
(2) The information processing device according to (1), wherein the information regarding the relationship includes at least one of a degree of intimacy between the contributor and the viewer, a relationship between the contributor and the viewer in the content, or history information of the viewer for the content contributed by the contributor in past.
(3) The information processing device according to (1) or (2), wherein the information regarding the relationship includes at least one of the degree of intimacy between the contributor and the viewer, a relationship between the contributor and the viewer in the content, or history information of the viewer for the content contributed by the contributor in the past.
(4) The information processing device according to any one of (1) to (3), wherein the acquisition unit sets a position of the virtual commentator, and
   the comment generation unit generates the comment according to the position.
(5) The information processing device according to (4), wherein the comment generation unit generates the comment based on a position comment list in which candidates of the comment to be uttered by the virtual commentator for each position are listed.
(6) The information processing device according to (5), wherein the comment generation unit generates the comment based on a comment list obtained by excluding comments of a predetermined number of times from comments previously uttered by the virtual commentator from the position comment list.
(7) The information processing device according to any one of (4) to (6), wherein the acquisition unit causes the contributor or the viewer to select a target of the position of the virtual commentator.
(8) The information processing device according to any one of (4) to (6), wherein the acquisition unit automatically sets the position of the virtual commentator based on the information regarding the relationship.
(9) The information processing device according to any one of (1) to (8), wherein the acquisition unit sets a target of the comment to be uttered by the virtual commentator, and
   the comment generation unit generates the comment according to the target of the comment.
(10) The information processing device according to (9), wherein the acquisition unit causes the contributor or the viewer to select a target of the comment.
(11) The information processing device according to (9), wherein the acquisition unit automatically sets a target of the comment based on the information regarding the relationship.
(12) The information processing device according to any one of (1) to (11), wherein the comment generation unit generates the comment according to a genre to which the content belongs.
(13) The information processing device according to any one of (1) to (12), wherein the comment generation unit corrects the generated comment based on the information regarding the relationship.
(14) The information processing device according to (13), wherein the comment generation unit corrects an ending of the generated comment based on a hierarchical relationship between the contributor and the viewer.
(15) The information processing device according to any one of (1) to (14), further including an extraction unit that extracts an event of the content,
   wherein the comment generation unit generates the comment for the event.
(16) The information processing device according to (15), wherein in a case where a time difference from a time at which a preceding event occurs to a time at which a next event occurs in the content is less than a predetermined time, the comment generation unit skips generation of a comment for the next event.
(17) The information processing device according to (15), wherein in a case where a time difference from a time at which a preceding event occurs to a time at which a next event occurs in the content is less than a predetermined time, and a priority of the next event is higher than a priority of the preceding event, the comment generation unit generates a comment for the next event and requests to stop utterance of the comment generated for the preceding event.
(18) The information processing device according to any one of (1) to (17), wherein the comment generation unit generates a comment to be uttered by each of two or more virtual commentators.
(19) The information processing device according to (18), wherein the comment generation unit generates the comment in such a way that a second virtual commentator of the two or more virtual commentators makes utterance after utterance of a first virtual commentator of the two or more virtual commentators is completed.
(20) The information processing device according to (18) or (19), wherein the comment generation unit generates the comment to be uttered by one of the two or more virtual commentators to the other one of the two or more virtual commentators.
(21) The information processing device according to any one of (1) to (20), wherein the acquisition unit acquires the number of viewers who are currently viewing the content, and
   the comment generation unit generates the comment to be uttered by each of the virtual commentators whose number corresponds to the number of viewers, and increases or decreases the number of virtual commentators according to an increase or decrease in number of viewers.
(22) The information processing device according to any one of (1) to (21), wherein the comment generation unit acquires a feedback from the viewer and generates the comment according to the feedback.
(23) The information processing device according to any one of (1) to (22), further including:
   an editing/rendering unit that incorporates at least one of text data or sound data corresponding to the comment into the content and superimposes the animation of the virtual commentator on the content.
(24) The information processing device according to (23), further including an animation generation unit that generates an animation of the virtual commentator,
   wherein the editing/rendering unit superimposes the animation of the virtual commentator on the content.
(25) The information processing device according to (24), wherein the editing/rendering unit adjusts a position of the animation in the content according to a position of the virtual commentator.
(26) The information processing device according to any one of (23) to (25), further including an utterance control unit that converts the comment into the sound data.
(27) The information processing device according to any one of (9) to (11), further including:
   an utterance control unit that converts the comment into sound data;
   an editing/rendering unit that incorporates the sound data into the content; and
   an animation generation unit that generates an animation of the virtual commentator,
   wherein the acquisition unit sets a target of the comment to be uttered by the virtual commentator, and
   the animation generation unit generates the animation in which an orientation of the virtual commentator is adjusted according to the target of the comment, and
   the editing/rendering unit superimposes the animation of the virtual commentator on the content.
(28) The information processing device according to any one of (1) to (27), wherein the acquisition unit acquires line-of-sight information of the contributor or the viewer, and
   the comment generation unit generates the comment based on the light-of-sight information.
(29) The information processing device according to (28), wherein the comment generation unit adjusts a display position of the comment in the content based on the line-of-sight information.
(30) An information processing method including:
   acquiring information regarding a relationship between a contributor of a content and a viewer of the content; and
   generating a comment to be uttered by a virtual commentator based on the information regarding the relationship.
(31) An information processing system in which a first user terminal, an information processing device, and a second user terminal are connected via a predetermined network,
   the information processing device including:
   an acquisition unit that acquires information regarding a relationship between a contributor who contributes a content from the first user terminal to the information processing device and a viewer who views the content via the second user terminal; and
   a comment generation unit that generates a comment to be uttered by a virtual commentator based on the information regarding the relationship.

### Reference Signs List

1 INFORMATION PROCESSING SYSTEM
10, 110, M1 USER TERMINAL
20 USER INFORMATION RETENTION UNIT
30 EVENT EXTRACTION UNIT
31 IMAGE ANALYSIS UNIT
32 SPEECH ANALYSIS UNIT
40 COMMENT GENERATION UNIT
41 POSITION/TARGET CONTROL UNIT
50 UTTERANCE CONTROL UNIT
60 AVATAR GENERATION UNIT
70 EDITING/RENDERING UNIT
80 DISTRIBUTION UNIT
90 NETWORK
100 CLOUD
120 SETTING UNIT
1001 CPU
1002 ROM
1003 RAM
1010 INTERNAL BUS
1100 INPUT/OUTPUT INTERFACE
1101 SENSOR INPUT UNIT
1102 OPERATION UNIT
1103 DISPLAY UNIT
1104 SOUND OUTPUT UNIT
1105 STORAGE UNIT
1106 COMMUNICATION UNIT
A10, A11, A12, A13 VIEWER
A100 VIEWER SIDE
U1 USER
U100 USER SIDE

## Claims

1. An information processing device including:
an acquisition unit that acquires information regarding a relationship between a contributor of a content and a viewer of the content; and
a comment generation unit that generates a comment to be uttered by a virtual commentator based on the information regarding the relationship.

2. The information processing device according to claim 1, wherein the information regarding the relationship includes at least one of a degree of intimacy between the contributor and the viewer, a relationship between the contributor and the viewer in the content, or history information of the viewer for the content contributed by the contributor in past.

3. The information processing device according to claim 2, wherein the comment generation unit generates the comment based on a position comment list in which candidates of the comment to be uttered by the virtual commentator for each position are listed.

4. The information processing device according to claim 1, wherein the acquisition unit sets a position of the virtual commentator, and
the comment generation unit generates the comment according to the position.

5. The information processing device according to claim 1, wherein the acquisition unit sets a target of the comment to be uttered by the virtual commentator, and
the comment generation unit generates the comment according to the target of the comment.

6. The information processing device according to claim 1, wherein the comment generation unit generates the comment according to a genre to which the content belongs.

7. The information processing device according to claim 1, wherein the comment generation unit corrects the generated comment based on the information regarding the relationship.

8. The information processing device according to claim 1, further including an extraction unit that extracts an event of the content,
wherein the comment generation unit generates the comment for the event.

9. The information processing device according to claim 8, wherein in a case where a time difference from a time at which a preceding event occurs to a time at which a next event occurs in the content is less than a predetermined time, the comment generation unit skips generation of a comment for the next event.

10. The information processing device according to claim 1, wherein the comment generation unit generates a comment to be uttered by each of two or more virtual commentators.

11. The information processing device according to claim 10, wherein the comment generation unit generates the comment in such a way that a second virtual commentator of the two or more virtual commentators makes utterance after utterance of a first virtual commentator of the two or more virtual commentators is completed.

12. The information processing device according to claim 10, wherein the comment generation unit generates the comment to be uttered by one of the two or more virtual commentators to the other one of the two or more virtual commentators.

13. The information processing device according to claim 1, wherein the acquisition unit acquires the number of viewers who are currently viewing the content, and
the comment generation unit generates the comment to be uttered by each of the virtual commentators whose number corresponds to the number of viewers, and increases or decreases the number of virtual commentators according to an increase or decrease in number of viewers.

14. The information processing device according to claim 1, wherein the comment generation unit acquires a feedback from the viewer and generates the comment according to the feedback.

15. The information processing device according to claim 1, further including:
an animation generation unit that generates an animation of the virtual commentator; and
an editing/rendering unit that incorporates at least one of text data or sound data corresponding to the comment into the content and superimposes the animation of the virtual commentator on the content.

16. The information processing device according to claim 15, wherein the editing/rendering unit adjusts a position of the animation in the content according to a position of the virtual commentator.

17. The information processing device according to claim 1, wherein the acquisition unit acquires line-of-sight information of the contributor or the viewer, and
the comment generation unit generates the comment based on the light-of-sight information.

18. The information processing device according to claim 17, wherein the comment generation unit adjusts a display position of the comment in the content based on the line-of-sight information.

19. An information processing method including:
acquiring information regarding a relationship between a contributor of a content and a viewer of the content; and
generating a comment to be uttered by a virtual commentator based on the information regarding the relationship.

20. An information processing system in which a first user terminal, an information processing device, and a second user terminal are connected via a predetermined network,
the information processing device including:
an acquisition unit that acquires information regarding a relationship between a contributor who contributes a content from the first user terminal to the information processing device and a viewer who views the content via the second user terminal; and
a comment generation unit that generates a comment to be uttered by a virtual commentator based on the information regarding the relationship.
